# EUROPEAN PATENT APPLICATION

(11) **EP 4 768 202 A1**
(43) Date of publication of application: **01.07.2026**
(21) Application number: 24855857.9
(22) Date of filing: 22.08.2024
(51) Int. Cl.: B25J 11/00, B25J 19/00, B62D 57/032

(54) **ROBOT**

(30) Priority: 24.08.2023 CN 202311074484
(71) Applicant: NANJING WEILAN INTELLIGENT TECHNOLOGY CO., LTD., Jiangsu 211899 (CN)
(72) Inventor: LIU, Weichao, Nanjing, Jiangsu 211899 (CN)
(74) Representative: advotec.
(86) International application number: PCT/CN2024/113816
(87) International publication number: WO 2025/040135

(57) **Abstract**

A robot, comprising: a trunk structure(10), a controller(210), a charging structure, a driving assembly(410), and a locomotion structure(50). The trunk structure(10) has a mounting cavity(14); the controller(210)is mounted in the mounting cavity(14); the charging structure is connected to the trunk structure(10) and is electrically connected to the controller(210) and is configured to supply power tothecontroller(210); and the driving assembly(410) is electrically connected to the controller(210), the driving assembly(410) is mounted on the trunk structure(10), the locomotion structure(50) is connected to an output end of the driving assembly(410), and the driving assembly(410) is controlled by the controller (210) to drive the locomotion structure(50) to move.

## Description

### CROSS-REFERENCE TO RELATED APPLICATION

The present application claims priority to Chinese Patent Application No. 202311074484.X, filed with the Chinese Patent Office on August 24, 2023, and entitled "ROBOT", the entire contents of which are incorporated herein by reference.

### TECHNICAL FIELD

The present application relates to the technical field of robot automation, and in particular to a robot.

### BACKGROUND

With the rapid development of science and technology, more and more scenarios have begun to use robots to replace manual operations. Thus, robots with various functions have emerged as the times require, capable of providing users with a variety of business services. Robots can be, for example, wheeled robots or legged robots. On the other hand, with the advancement of artificial intelligence technology, the interaction between humans and robots tends to be more intelligent and natural.

Therefore, robots with strong mobility and adaptability are expected to be widely used in fields such as home, industry, rescue, and detection.

### SUMMARY OF THE INVENTION

Based on this, it is necessary to address the problem of the single application field of existing robots and provide a robot.

The present application provides a robot, including: a trunk structure having a mounting cavity; a controller mounted in the mounting cavity; a charging structure connected to the trunk structure and electrically connected to the controller, the charging structure is configured to supply power to the controller; and a driving assembly and a locomotion structure, the driving assembly is electrically connected to the controller and mounted on the trunk structure, the locomotion structure is connected to an output end of the driving assembly, and the driving assembly is controlled by the controller to drive the locomotion structure to move.

In one embodiment, the driving assembly includes a first actuator, a second actuator, and a third actuator; wherein the first actuator is mounted on the trunk structure, the first actuator is configured to drive the movement of a hip joint of the robot; an output end of the first actuator is connected to an input end of the second actuator, an output end of the second actuator is connected to a thigh structure of the locomotion structure, and the second actuator is configured to drive the movement of the thigh structure; the output end of the second actuator is further configured to be connected to an input end of the third actuator, an output end of the third actuator is connected to the calf structure, the third actuator is configured to drive the movement of the calf structure, and the calf structure is rotatably connected to the thigh structure.

In one embodiment, the robot further including a hidden wiring structure configured to hide a first cable between the third actuator and the controller, the hidden wiring structure including: a first limiting member disposed on a first surface of the second actuator, the first limiting member is configured to guide the first cable to extend along the first surface; a second limiting member disposed on a second surface of the second actuator, the second limiting member is configured to guide the first cable to extend along the second surface; and/or, further including a hidden wiring structure configured to hide the first cable between the third actuator and the controller and/or a second cable between the second actuator and the controller, the hidden wiring structure including: a third limiting member connected to the trunk structure, the third limiting member has a plurality of fixing parts for accommodating the first cable and/or the second cable; and/or, further including a hidden wiring structure, the hidden wiring structure further including a joint shell disposed between the locomotion structure and the trunk structure, the joint shell is configured to cover the driving assembly exposed outside the trunk structure, the first cable between the third actuator and the controller exposed outside the trunk structure, and the second cable between the second actuator and the controller exposed outside the trunk structure.

In one embodiment, the robot further including a transmission structure disposed between the calf structure and the third actuator, the transmission structure including a crank and a connecting rod, the crank rotating coaxially with an output end of the third actuator, one end of the connecting rod being rotatably connected to the crank and the other end being rotatably connected to the calf structure, and the calf structure rotating relative to the thigh structure under the driving of the third actuator.

In one embodiment, the locomotion structure includes a thigh structure, a calf structure, and a sole structure, the thigh structure is rotatably connected to the calf structure, the sole structure is disposed on a side of the calf structure away from the thigh structure, and the sole structure includes an insert and a sole elastic member; wherein the insert and the sole elastic member are integrally formed; or the insert and the sole elastic member are fixedly connected by a connecting member; or the sole elastic member further includes a first elastic body and a second elastic body, the first elastic body is fixedly connected to the insert, and the insert is fixedly connected to the first elastic body, and the first elastic body and the second elastic body are made of different materials; and/or, the thigh structure includes a thigh member, the thigh member includes a thigh bracket and a lug integrally connected to the thigh bracket, the thigh bracket is provided with a first shaft hole, the lug is provided with a second shaft hole corresponding to the first shaft hole, and the first shaft hole and the second shaft hole are configured to assemble a driving component.

In one embodiment, the charging structure is mounted on the trunk structure, the charging structure includes a battery member and a charging connecting member, the battery member is configured to store electrical energy and connected to the controller, and the charging connecting member is configured to electrically connect to an external electrical connecting member to charge the battery member; or, the charging structure is mounted on the trunk structure, the charging structure includes a battery member and a charging connecting member, the battery member is configured to store electrical energy and connected to the controller, the charging connecting member is configured to electrically connect to an external electrical connecting member to charge the battery member, the trunk structure includes a battery member pressing plate, the mounting pressing plate and the trunk structure form a cavity for accommodating the battery member of the charging structure, and the charging connecting member is disposed on an outer surface of the trunk structure.

In one embodiment, the robot further including a heat dissipation mechanism for dissipating heat of the mounting cavity, the heat dissipation mechanism including: a first heat dissipation member and an air outlet structure, the first heat dissipation member is disposed on the trunk structure close to the controller, the air outlet structure has a first air outlet channel, the first heat dissipation member is configured to drive the gas outside the trunk structure to enter the mounting cavity and then the gas is discharged out of the housing through the first air outlet channel; and/or, a second heat dissipation member disposed close to the battery member for dissipating heat from the battery member.

In one embodiment, the robot further including an environment perception mechanism, the environment perception mechanism including: at least one radar disposed on the trunk structure or a head structure of the robot; and/or, at least one dynamic object detection member disposed on the trunk structure or the head structure of the robot, the dynamic object detection member is configured to detect surrounding dynamically moving objects; and/or, a distance detection member disposed on the head structure, the locomotion structure, or the trunk structure of the robot, the position detection member is configured to enable the locomotion robot to linearly perceive the surrounding environment; and/or, at least one temperature sensor disposed on the head structure, the trunk structure, or the locomotion structure of the robot, the temperature sensor is configured to perceive the temperature of the surrounding environment; and/or, at least one humidity sensor disposed on the head structure, the trunk structure, or the locomotion structure of the robot, the humidity sensor is configured to perceive the humidity of the surrounding environment; and/or, a camera disposed on the head structure, the trunk structure, or the locomotion structure of the robot, the camera is configured to capture images of the surrounding environment and feed back to the controller; and/or, at least one touch sensor disposed on the head structure or the trunk structure of the robot, the touch sensor is configured to feed back a touch signal to the controller after being touched externally; and/or, at least one voice interaction member disposed on the head structure, the trunk structure, or the locomotion structure of the robot, the voice interaction member is configured for external voice input and/or external voice output; and/or, at least one display disposed on the head structure or the trunk structure of the robot, the display is connected to the controller and is configured to externally display patterns or graphics.

In one embodiment, the robot further including at least one feature member disposed on the head structure, the trunk structure, or the locomotion structure of the robot, the feature member including a connected feature support part, a feature transition part, and a feature counterweight part, the feature support part is configured to be connected to the trunk structure; one end of the feature transition part is connected to the feature support part, and the other end of the feature transition part is bent and connected to the feature counterweight part, the feature transition part has a shaking state in which it undergoes elastic deformation under external force to drive the feature counterweight part to shake relative to the feature support part; and/or, further including at least one identification member disposed on the head structure, the trunk structure, or the locomotion structure of the robot, the identification member is configured to identify the robot; and/or, the trunk structure including a chassis structure, the chassis structure including a base plate, at least one pair of oppositely disposed side plates, and at least one pair of oppositely disposed end plates, the side plates are connected to the base plate, the end plates are connected to the base plate, two ends of any side plate are respectively connected to the two end plates, the end plates are configured to mount moving components, all the side plates, all the end plates, and the base plate together enclose the mounting cavity with at least one side open; and/or, further including a housing member covering the periphery of the chassis structure and closing the opening of the accommodating cavity; and/or, further including a feature shell covering the outer side of the housing member, the feature shell including an inner shell and an outer shell wrapping the inner shell, the softness of the outer shell being greater than that of the outer peripheral surface of the housing member, the chassis structure, or the trunk structure.

In one embodiment, the robot further including a braking structure driven by external force to cut off a circuit, the braking structure including: a trigger assembly including a spaced moving member and at least one switch body, the switch body is connected to the trunk structure, the moving member including a first position and a second position; in the first position, the moving member triggers the switch body and the circuit is disconnected; in the second position, the moving member is separated from all the switch bodies; and at least one reset assembly connected between the moving member and the trunk structure, the reset assembly applying a biasing force to the moving member toward the second position.

The robot described above has the following advantages:
1. The robot provided by the present application, the charging structure supplies power to the controller and the driving assembly, and the driving assembly is controlled by the controller to drive the locomotion structure to move, thereby realizing the swing or other forms of the movement of the locomotion structure such as the leg structure in a quadruped robot. The robot can perform various morphological movements such as walking, retreating, rolling, and lying down, thus meeting the application requirements in various fields such as home, industry, rescue, and detection, and achieving wide applicability of the robot.
2. Multiple actuators cooperate to realize various movement modes of the robot. The actuators are connected in series to further realize separate control of the hip joint, thigh, and lower leg, providing the possibility for the robot to achieve various movement forms and gaits.
3. For quadruped robots and humanoid robots, hidden wiring is particularly important. If the cables are exposed, potential safety hazards may exist. For example, if the robot is hooked by external force during walking, the robot may move irregularly, thereby affecting the person who exerts the external force or the robot itself, and even causing injury to the user or damage to the robot.

To this end, in one implementation, a hidden wiring structure is adopted. Through the joint cooperation of the first limiting member and the second limiting member, the first cable between the third actuator, which is disposed farthest from the trunk structure, and the controller can be accommodated on the outer wall surface of the second actuator, thereby avoiding the above problems caused by the first cable being independently exposed.

In another implementation, the hidden wiring structure further includes a third limiting member, which is connected and fixed to the trunk structure. The third limiting member accommodates the first cable and the second cable between the second actuator and the controller, ensuring the reliable connection between the first cable and the second cable and the controller, and further ensuring the reliability of the wiring.

In another implementation, the hidden wiring structure further includes a joint shell, which can cover the driving assembly exposed outside the trunk structure, and simultaneously cover the first cable and the second cable exposed outside the trunk structure, further ensuring the reliability of the wiring and effectively avoiding the first cable and the second cable being exposed.

4. The sole structure includes an insert and an elastic body. The insert can enhance the hardness and supporting force of the sole structure, and the sole elastic member can increase the elasticity and wear resistance of the sole structure, prolonging the service life of the sole structure; in addition, the sole elastic member is integrally formed with the insert or adhesively connected to the insert, having a simple structure and being suitable for mass production.

When the sole elastic member is adhesively connected to the insert, the sole elastic member includes a first elastic body connected to the bottom surface of the insert and a second elastic body connected to the bottom surface of the first elastic body, and the first elastic body and the second elastic body are made of different materials.

For the thigh structure, the thigh bracket and lug are integrally arranged, the first shaft hole and the second shaft hole on the thigh bracket and the lug are configured to assemble driving components. By simplifying the two mutually buckled components on the thigh in the prior art into one thigh member, the manufacturing precision of the first shaft hole and the second shaft hole can be improved, thereby improving the assembly precision of the thigh structure and the calf, reducing the assembly difficulty, and being beneficial to mass production. At the same time, it can reduce the problem of movement collision between the driving component and the thigh component caused by the hole alignment error on the two existing components, and further reduce the problem of high movement noise.

6. In the heat dissipation mechanism, the first heat dissipation member sucks the gas outside the housing into the accommodating cavity, and effectively discharges the gas in the accommodating cavity out of the housing through the first air outlet channel of the air outlet structure, accelerating the exchange of hot and cold gases in the accommodating cavity. Thus, the heat generated by the battery member, the control member, etc. in the accommodating cavity can be discharged in a timely and effective manner, improving the heat dissipation effect of the robot, prolonging the service life of the robot, and enabling the battery member and the control member to be within a safe charging temperature, improving the safety performance of the robot.

7. For the environment perception mechanism, the radar can realize the scanning and acquisition of a panoramic map; the dynamic object detection member can dynamically detect the environment during the movement of the robot; the distance detection member can linearly perceive the surrounding environment such as obstacles and cliffs, so that the robot can perform corresponding actions such as climbing steps and avoiding under the driving of the controller; the temperature sensor and the humidity sensor realize the feedback of temperature and humidity, ensuring that the robot can perceive the surrounding space environment; the camera can take pictures of the surrounding environment, ensuring that the robot obtains the surrounding environment images as needed; the setting of the touch sensor improves the human-robot interaction capability of the robot, ensuring that the robot feedbacks external touches; the voice interaction member can perform voice interaction with the external environment, further improving the human-robot interaction capability; the display screen can display images, thereby showing various emotional changes of the robot according to the actual situation.

8. For the setting of the feature member, during the walking or movement of the robot, the vibration of the body is transmitted to the feature member disposed thereon, causing the transition part on the feature member to undergo elastic deformation, driving the counterweight part to shake relative to the support part, and at this time, the transition part is in a shaking state. The feature member can be used as the ear structure of the head of the quadruped robot or the tail structure of the quadruped robot. During the movement of the quadruped robot, the ear structure or the tail structure shakes correspondingly, which can achieve a good and accurate human-robot interaction effect.

On the other hand, the housing member covers the trunk structure, and the feature shell is disposed on the outer side of the housing member. The feature shell and the housing member are respectively used as a form of bionics of the robot, further improving the animal-like or human-like form of the robot and further enhancing the human-robot interaction.

9. For the braking structure, when an external force causes the moving member to touch the switch body, the robot can be braked, thereby realizing the braking action of the robot in an emergency. At the same time, a reset assembly is disposed between the switch body and the moving member, and the moving member always maintains a tendency to move from the first position to the second position under the driving of the reset assembly. It is ensured that during the operation of the robot, even if the moving member is mistakenly touched, the moving member will return to the second position again under the pushing action of the reset assembly, thereby reducing the situation that the circuit control apparatus causes the abnormal power-off of the robot due to being mistakenly touched.

### BRIEF DESCRIPTION OF THE DRAWINGS

Fig. 1 is a schematic structural diagram of a robot provided in one implementation.
Fig. 2 is an exploded view of other structures of the robot except the head structure and the locomotion structure provided in one implementation.
Fig. 3 is a schematic structural diagram of the chassis structure in the robot provided in one implementation.
Fig. 4 is a schematic diagram of the cooperation between the driving assembly and the hidden wiring structure provided in one implementation.
Fig. 5 is a structural diagram of Fig. 4 in a top view after the locomotion structure is installed and the first cable is removed.
Fig. 6 is a schematic structural diagram of the driving assembly cooperating with the first cable, the second cable and the third cable as well as the first limiting member and the second limiting member in one embodiment.
Fig. 7 is a structural diagram of the robot body after removing part of the feature shell, part of the housing, and the braking structure provided in one implementation.
Fig. 8 is a side view of other structures of the robot except the head structure and the locomotion structure provided in one implementation.
Fig. 9 is a cross-sectional view of Fig. 8 along the A-A direction provided in one implementation.
Fig. 10 is a cross-sectional view of Fig. 8 along the direction from the head to the tail provided in one implementation.
Fig. 11 is a cross-sectional view of Fig. 8 along the B-B direction provided in one implementation.
Fig. 12 is a structural diagram of the head structure connected to the matching member and the head structure is disassembled provided in one implementation.
Fig. 13 is a schematic structural diagram of the feature member of the robot provided in one implementation.
Fig. 14 is a schematic structural diagram of the thigh member and the calf structure cooperating with the transmission structure provided in one implementation.
Fig. 15 is a schematic structural diagram of the thigh structure provided in one implementation.
Fig. 16 is a structural diagram of the thigh member and the exterior part after being disassembled from Fig. 15.
Fig. 17 is a cross-sectional view of the thigh member, the exterior part, and the thigh elastic member in a perspective after being assembled provided in one implementation
Fig. 18 is a cross-sectional view of the calf structure and the thigh structure after being assembled provided in one implementation.
Fig. 19 is a structural diagram of the calf structure and the sole structure after being assembled provided in one implementation.
Fig. 20 is a cross-sectional view of the calf structure provided in one implementation.
Fig. 21 is a schematic structural diagram of the sole structure provided in one implementation.
Fig. 22 is a cross-sectional view of the sole structure provided in one implementation.
Fig. 23 is a schematic structural diagram of the insert in a perspective provided in one implementation.
Fig. 24 is a schematic structural diagram of the insert in another perspective provided in one implementation.
Fig. 25 is a cross-sectional view of the sole structure provided in another implementation.
Fig. 26 is a schematic structural diagram of the braking structure cooperating with the radar provided in one implementation.
Fig. 27 is a cross-sectional view along the switch body in Fig. 26.

REFERENCE SIGNS: 10 - trunk structure; 110 - chassis structure; 111 - weight reduction part; 112 - reinforcing part; 112a - axial reinforcing rib; 112b - side reinforcing rib; 113 - side plate; 114 - end plate; 115 - base plate; 115a - weight reduction groove; 116 - fourth connection bracket; 117a - first chassis mounting part; 117b - second chassis mounting part; 117c - third chassis mounting part; 117d - fourth chassis mounting part; 118a - first air inlet; 118b - third air outlet; 118c - first air outlet section; 12 - first connection bracket; 12a - winding part; 12b - edge part; 13 - second connection bracket; 14 - mounting cavity; 210 - controller; 220 - braking structure; 221 - trigger assembly; 221b - switch body; 221a - moving member; 221c - moving support part; 221d - moving abutting part; 222 - reset assembly; 222a - connecting member; 222b - biasing return member; 222c - guide member; 223 - braking mounting assembly; 223a - braking mounting seat; 223b - limiting part; 224 - switch limiting assembly; 224a - first switch limiting member; 224b - second switch limiting member; 31 - battery member; 32 - mounting pressing plate; 410 - driving assembly; 411 - first actuator; 412 - second actuator; 413 - third actuator; 421 - first cable; 422 - second cable; 423 - third cable; 430 - transmission structure; 431 - crank; 432 - connecting rod; 50 - locomotion structure; 510 - thigh structure; 511 - thigh member; 511a - thigh bracket; 511b - lug; 511c - first shaft hole; 511d - second shaft hole; 511e - second seam allowance; 511f - thigh clamping groove; 511g - thigh through hole; 512 - exterior part; 512a - first seam allowance; 512b - thigh buckle; 512c - thigh locking hole; 513 - thigh elastic member; 520 - calf structure; 521 - calf limiting member; 522 - convex rib; 523 - calf cavity; 524 - calf locking hole; 530 - sole structure; 531 - insert; 5311 - insert body; 5312 - insert through hole; 5313 - insert guide member; 5314 - insert limiting member; 5315 - special-shaped convex block; 5316 - limiting block; 5317 - insert locking hole; 5318 - glue groove; 532 - sole elastic member; 5321 - cavity groove; 5322 - elastic groove; 5323 - first elastic body; 5324 - second elastic body; 54 - connecting pin shaft; 55 - rotating shaft locking member; 56 - buckle cover; 57 - protective cover; 60 - hidden wiring structure; 61 - first limiting member; 611 - first fixing part; 62 - second limiting member; 63 - third limiting member; 64 - joint shell; 710 - head structure; 720 - feature member; 721 - support part; 722 - transition part; 723 - counterweight part; 730 - housing member; 731 - outer housing; 732 - bottom housing; 740 - feature shell; 741 - inner shell; 742 - outer shell; 750 - identification member; 751 - collar body; 752 - nameplate; 80 - heat dissipation mechanism; 810 - first heat dissipation member; 811 - second air inlet; 812 - second air outlet channel; 812a - second air outlet; 820 - air outlet structure; 821 - first air outlet channel; 830 - second heat dissipation member; 831 - third air outlet section; 832 - third air outlet channel; 840 - third heat dissipation member; 850 - fourth heat dissipation member; 860 - first guide member; 861 - air inlet duct; 91 - radar; 92 - dynamic object detection member; 93 - camera; 94 - touch sensor; 95 - microphone; 96 - display; 97 - distance detection member; 98 - speaker.

### DETAILED DESCRIPTION OF IMPLEMENTATION

To make the above objects, features, and advantages of the present application more obvious and understandable, the specific implementations of the present application will be described in detail below with reference to the accompanying drawings. In the following description, many specific details are set forth to fully understand the present application. However, the present application can be implemented in many other ways different from those described here, and those skilled in the art can make similar improvements without violating the connotation of the present application. Therefore, the present application is not limited by the specific embodiments disclosed below.

In the description of the present application, if these terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" appear, these terms indicate the orientation or positional relationship based on the orientation or positional relationship shown in the accompanying drawings, which are only for the convenience of describing the present application and simplifying the description, rather than indicating or implying that the referred apparatus or element must have a specific orientation, be constructed and operated in a specific orientation, and thus cannot be understood as a limitation to the present application.

In the present application, unless otherwise clearly specified and limited, if terms such as "install", "connection", "linkage", "fix" appear, these terms should be understood in a broad sense. For example, it can be a fixed connection, a detachable connection, or an integral connection; it can be a mechanical connection or an electrical connection; it can be a direct connection or an indirect connection through an intermediate medium, and it can be the internal communication between two elements or the interaction relationship between two elements, unless otherwise clearly limited. For those of ordinary skill in the art, the specific meanings of the above terms in the present application can be understood according to specific situations.

It should be noted that if an element is referred to as being "fixed to" or "disposed on" another element, it can be directly on the other element or there can be an intermediate element. If an element is considered to be "connected" to another element, it can be directly connected to the other element or there can be an intermediate element at the same time. If present, the terms "vertical", "horizontal", "upper", "lower", "left", "right" and similar expressions used in the present application are only for the purpose of description and do not represent the only implementation.

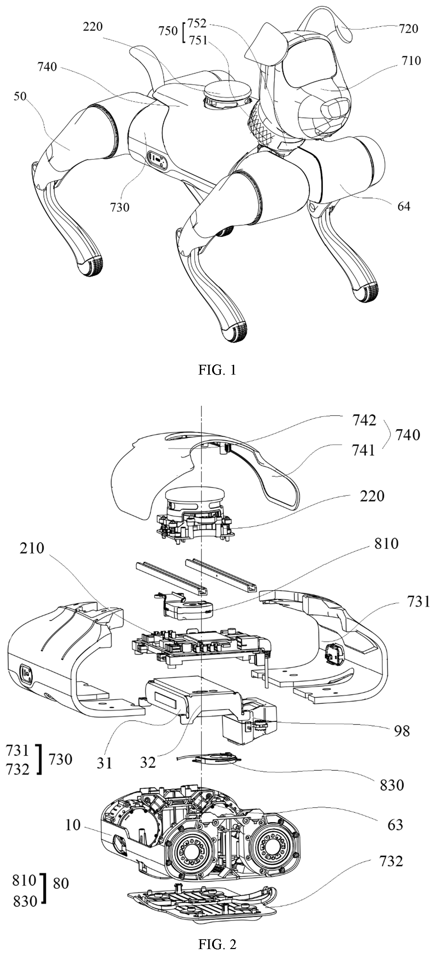

This embodiment provides a robot, as shown in Fig. 1 to Fig. 27, including a trunk structure 10, a controller 210, a charging structure, a driving assembly 410, and a locomotion structure 50. Wherein, the trunk structure 10 has a mounting cavity 14, the controller 210 is mounted in the mounting cavity 14, the charging structure is connected to the trunk structure 10 and electrically connected to the controller 210 for supplying power to the controller 210; the driving assembly 410 is electrically connected to the controller 210 and mounted on the trunk structure 10, the locomotion structure 50 is connected to an output end of the driving assembly 410, and the driving assembly 410 is controlled by the controller 210 to drive the locomotion structure 50 to move. The robot provided by the present application, the charging structure supplies power to the controller and the driving assembly, and the driving assembly is controlled by the controller to drive the locomotion structure to move, thereby realizing the swing or other forms of the movement of the locomotion structure such as the leg structure in a quadruped robot. The robot can perform various morphological movements such as walking, retreating, rolling, and lying down, thus meeting the application requirements in various fields such as home, industry, rescue, and detection, and achieving wide applicability of the robot. As an understanding, in this embodiment, Fig. 1 shows a quadruped robot. In other optional implementations, a humanoid robot or other multi-legged robots can also be used.

In this embodiment, as shown in Fig. 1, Fig. 14, and Fig. 19, the locomotion structure 50 includes a thigh structure 510, a calf structure 520, and a sole structure 530. The thigh structure 510 is rotatably connected to the calf structure 520, and the sole structure 530 is disposed on a side of the calf structure 520 away from the thigh structure 510. The walking action of the robot is realized through the cooperation of the thigh structure 510, the calf structure 520, and the sole structure 530.

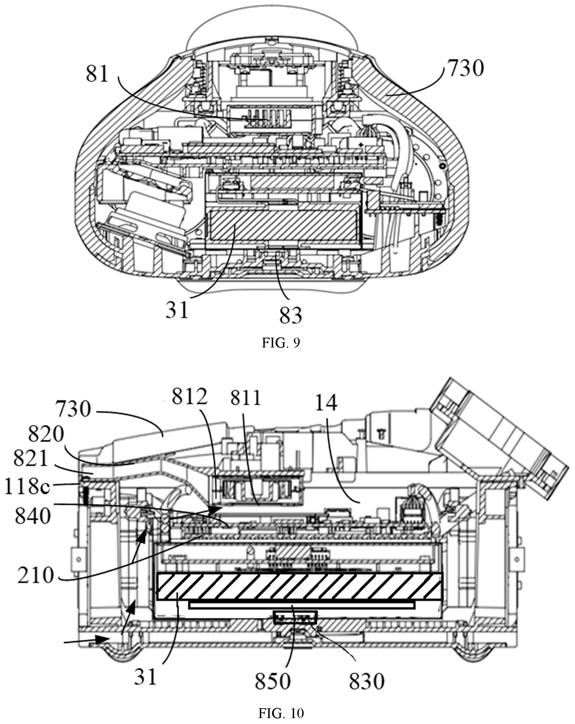

As shown in Fig. 9, the driving assembly 410 includes a first actuator 411, a second actuator 412, and a third actuator 413; wherein the first actuator 411 is mounted on the trunk structure 10, the first actuator 411 is configured to drive the movement of a hip joint of the robot; an output end of the first actuator 411 is connected to an input end of the second actuator 412, an output end of the second actuator 412 is connected to a thigh structure 510 of the locomotion structure 50, and the second actuator 412 is configured to drive the movement of the thigh structure 510; the output end of the second actuator 412 is further configured to be movably connected to an input end of the third actuator 413, an output end of the third actuator 413 is connected to the calf structure 520, the third actuator 413 is configured to drive the movement of the calf structure 520, and the calf structure 520 is rotatably connected to the thigh structure 510.

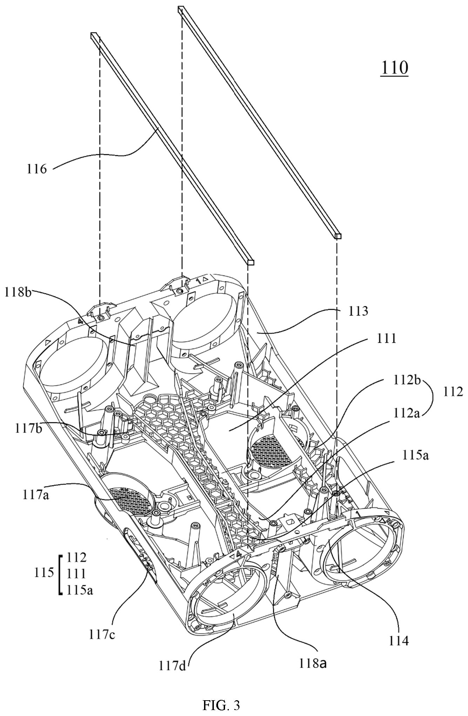

As shown in Fig. 3 and Fig. 10, the trunk structure 10 includes three parts, a chassis structure 110 and frame structures connected to the actuator. The frame structures comprise a first connection bracket 12 and a second connection bracket 13 (mentioned later) for fixing the third actuator 413 and the second actuator 412. The chassis structure 110 forms a mounting cavity 14 with an opening on one side, and the mounting cavity 14 is configured to accommodate components such as a battery member 31, a heat dissipation member, a speaker, a controller 210, and a first actuator 411.

As shown in Fig. 2, a housing member 730 and a feature shell 740 are further disposed on the outer side of the trunk structure 10. The housing member 730 covers the periphery of the chassis structure 110 and closes the opening of the accommodating cavity. The feature shell 740 is disposed on the outer side of the housing member 730. The feature shell 740 includes an inner shell 741 and an outer shell 742 wrapping the inner shell 741. The softness of the outer shell 742 is greater than that of the outer peripheral surface of the housing member 730, the chassis structure 110, or the trunk structure 10. The housing member 730 covers the trunk structure 10, and the feature shell 740 is disposed on the outer side of the housing member 730. The feature shell 740 and the housing member 730 are respectively used as a form of bionics of the robot, further improving the animal-like or human-like form of the robot and further enhancing the human-robot interaction.

Specifically, in one implementation of this embodiment, the housing member 730 includes two outer housings 731 and one bottom housing 732, which are jointly assembled into an outer housing body covering the chassis structure 110. The feature shell 740 comprises the inner shell 741 and the outer shell 742, and the inner shell 741 and the outer shell 742 can be assembled by means of buckles or thread locking, and of course, can also be connected by welding or bonding. For the housing member 730 and the feature shell 740, as long as the trunk structure 10 can realize the support of the corresponding overall structure, they can be optionally added or not added in some implementations.

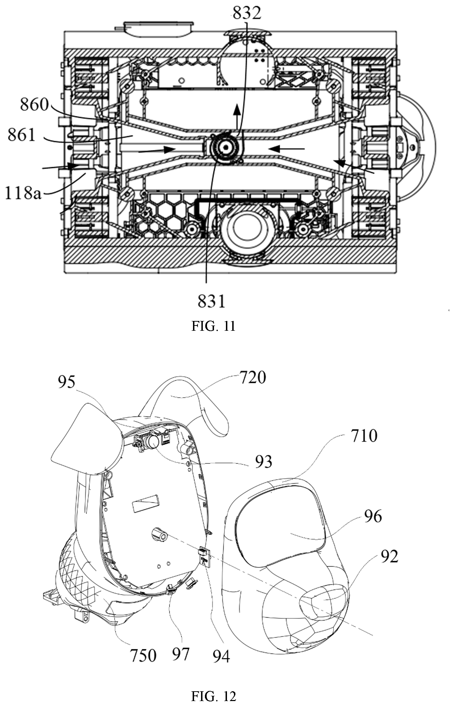

For the head structure 710, as shown in Fig. 1 and Fig. 12, the head structure has two detachable shells with an accommodating cavity for accommodating a plurality of sensors inside. At the same time, the head structure 710 is further provided with a mounting part for mounting the feature member 720 and a mounting part for mounting with the trunk structure 10. The form of mounting with the trunk is not limited here, as long as the connection between the two can be realized. Whether a detachable connection method such as threads and buckles or an integral molding of the head structure and the trunk structure 10 is adopted, the above connection can be realized. Wherein, the sensors in the head structure are detailed in the following part of the environment perception structure.

As shown in Fig. 1, the robot further includes at least one identification member 750 disposed on the head structure, the trunk structure, or the locomotion structure of the robot for identifying the robot; specifically, the identification member 750 can be a connecting accessory such as a collar or a coat of the robot, covering the outer side of the trunk, the head, or the locomotion structure, so as to facilitate the user to find or highlight the position of the robot. As shown in Fig. 1, taking a collar as an example of the identification member, the collar includes a collar body 751 and a nameplate 752 disposed on the collar. The collar body can be made of a flexible material, and of course, the material can also be other materials, which are not limited here. The nameplate 752 can be printed with identification characters to facilitate external to identify or name the robot.

The controller 210 is the core component of the entire robot, which can control various functions and behaviors of the robot, such as walking, running, turning, jumping, etc. The controller 210 can receive and process information from other sensors, and guide the movement and behavior of the robot according to the information. The controller 210 can realize the human-robot interaction function with the robot. Specifically, in the embodiment, the controller 210 is the main control chip of the robot. The controller 210 can be connected to the chassis structure 110 through a mounting plate, and of course, can also be directly connected to the trunk structure 10 in some implementations.

As shown in Fig. 2, the charging structure is mounted on the trunk structure 10. The charging structure includes a battery member 31 and a charging connecting member 222a (not shown in the figure, which can be disposed at the abdomen position). The battery member 31 is configured to store electrical energy and connected to the controller 210. The charging connecting member 222a is configured to electrically connect to an external electrical connecting member 222a to charge the battery member 31; the charging connecting member 222a can be two electrode sheets or a wireless charging coil, and the specific form of the charging connecting member 222a is not limited here. For the battery member 31, the battery member 31 is the power source of the robot. The stored electrical energy is released through the battery member 31 to provide power for various parts of the robot, enabling the robot to work normally, such as walking, running, jumping, turning, etc. The specific form adopted by the battery member is not limited, and any battery form that can meet the requirement of storing electrical energy can be used. The installation of the battery member 31 can be realized by using a structure such as a mounting pressing plate 32 to install and fix the battery member 31. Of course, in other ways, the battery member 31 can also be directly limited by means of mounting slots and holes in the chassis structure 110, as long as the installation of the battery member 31 is satisfied.

For the convenience of understanding, the specific components are described in detail as follows:
Regarding the chassis structure 110 of the robot, Fig. 2 shows an exploded view of other structures of the robot except the head structure 710 and the locomotion structure 50 provided in one implementation, and Fig. 3 shows a schematic structural diagram of the chassis structure 110 in the robot provided in one implementation; the chassis structure 110 provided in this embodiment includes a base plate 115, a pair of oppositely disposed side plates 113, and a pair of oppositely disposed end plates 114. Wherein, the side plates 113 are connected to the base plate 115, the end plates 114 are connected to the base plate 115, two ends of any side plate 113 are respectively connected to the two end plates 114, the end plates 114 are configured to mount moving components, and all the side plates 113, all the end plates 114, and the base plate 115 together enclose the mounting cavity 14 with an opening on one side. The base plate 115 includes a plurality of spaced weight reduction parts 111 and reinforcing parts 112, and the reinforcing parts 112 are configured to enhance the torsional resistance of the base plate 115. In this embodiment, the mounting cavity 14 with an opening at the top is adopted. In other optional implementations, there can also be multiple openings in other directions, as long as the strength of the chassis structure 110 is ensured. The chassis structure 110 with an opening enclosed by the side plates 113, the end plates 114, and the base plate 115 in this embodiment provides an open installation space for various functional components on the robot, facilitating the assembly and maintenance of the robot; and by arranging the weight reduction parts 111 and the reinforcing parts 112 on the base plate 115, the problem of excessive weight of the robot body is solved while ensuring the load-bearing capacity of the chassis structure 110.

As shown in Fig. 3, the reinforcing part 112 provided in this embodiment is connected between the two end plates 114 and extends perpendicular to the torsional direction of the moving component to obtain a relatively good torsional resistance. However, it is not limited to this. For example, when there are a plurality of reinforcing parts 112, the extending direction of each reinforcing part 112 can also extend at a non-90-degree angle with the torsional direction of the moving component, as long as the combined action of each reinforcing part 112 can generate a good torsional resistance, it is allowed. The moving component in this embodiment can be the driving assembly 410, that is, a plurality of series-connected actuators, but it is not limited here, and any scheme for realizing the movement can be a moving component.

As an embodiment of the present application, the reinforcing part 112 includes a reinforcing rib, and the cross-sectional size of the reinforcing rib gradually decreases from the end plate 114 to the direction away from the moving component, thereby achieving a better torsional resistance effect. Wherein, the reinforcing rib includes an axial reinforcing rib 112a and two side reinforcing ribs 112b, and the axial reinforcing rib 112a is disposed between the two side reinforcing ribs 112b; the side reinforcing ribs 112b are connected to the adjacent side plates 113 to improve the stability of the connection between the base plate 115 and the side plates 113.

To further reduce the weight, the reinforcing rib provided in this embodiment is further provided with a plurality of weight reduction grooves 115a. As a variation of the weight reduction grooves 115a, the weight reduction grooves 115a can also be fully or partially replaced with weight reduction holes.

As an implementable manner of this embodiment, the weight reduction part 111 includes a through hole recessed from the outside to the inside, and the weight reduction part 111 is disposed between the side reinforcing rib 112b and the axial reinforcing rib 112a; the specific number of the weight reduction parts 111 can be set according to the requirements of the robot. In this embodiment, four weight reduction parts 111 are provided, and the four weight reduction parts 111 are arranged centrally symmetrically; through the exquisite arrangement of the structures of the weight reduction parts 111 and the reinforcing parts 112, this embodiment greatly meets the requirements of the robot for movement, support strength, and rigidity from a mechanical perspective while satisfying the weight reduction.

Referring to Fig. 3, in the technical solution of the present application, the chassis structure 110 further includes a fourth connection bracket 116, and two ends of the fourth connection bracket 116 are connected to the two oppositely disposed end plates 114, which can further reinforce and support the overall structure of the chassis.

In some other implementations, the fourth connection bracket 116 is provided with a plurality of connecting parts, which can be configured to install structural components such as a radar 91, a vision device, or a mechanical arm. As for the connection of the connecting parts, for the installation of the radar 91 and other similar components, fasteners such as screws may be adopted, or slot sliding installation or buckle locking, or other such forms may also be adopted, which are not limited here; wherein the fourth connection bracket 116 in this embodiment is selected as a metal guide rail, which can be made of aluminum alloy material. The tops of the two end plates 114 are provided with mounting holes, and the fourth connection bracket 116 is mounted on the mounting holes at the tops of the two end plates 114 through first bolts, which is convenient for disassembly and assembly. Of course, the connection mode between the connecting structure and the end plate 114 can also be buckle connection or welding, which is not limited here.

In some other implementations, the height of the side plate 113 is lower than the height of the end plate 114, and the top edge of the side plate 113 is not designed in a straight line, that is, the edge of the side plate 113 is provided with a plurality of recessed parts, thereby achieving a further weight reduction effect; in addition, the side plate 113 and the base plate 115 are in an arc transition, which can enhance the strength of the chassis structure 110, reduce the resistance of the robot during traveling, and make the outline of the chassis structure 110 smoother and more beautiful.

In this embodiment, the base plate 115 further includes a first chassis mounting part 117a for mounting a speaker. The first chassis mounting part 117a is provided with a mesh hollow structure for sound transmission of the speaker, and mounting columns for fixing the speaker 98 are provided on both sides of the mesh hollow structure; the mounting columns are provided with mounting holes, and the speaker 98 can be conveniently disassembled and assembled with the chassis structure 110 through second mounting bolts matched with the second mounting holes.

In this embodiment, the base plate 115 further includes a second chassis mounting part 117b for mounting the battery member 31, and brackets for fixing the circuit board are further provided at the four corners of the base plate 115, and the second chassis mounting part 117b is located in the space enclosed by the four brackets; the second chassis mounting part 117b is provided with a plurality of mounting holes, and the battery member 31 can be conveniently disassembled and assembled with the chassis structure 110 through thread fastening.

In this embodiment, the end plate 114 is provided with a fourth chassis mounting part 117d for mounting the actuator; the fourth chassis mounting part 117d is a through hole. During assembly, the mounting through hole is clamped with the housing of the actuator, and the actuator is further fixed on the end plate 114 through fourth bolts; in addition, the end plate 114 is further provided with a fifth chassis mounting part for mounting the tail of the robot.

Referring to Fig. 2 and Fig. 3, in one embodiment, the side plate 113 further includes at least one third chassis mounting part 117c for mounting a human-robot interaction panel. The third chassis mounting part 117c is a second through hole, and the human-robot interaction panel is clamped on the side plate 113 through the second through hole and electrically connected to the internal circuit structure. In this embodiment, the human-robot interaction panel can be a switch button, a charging socket, etc.

In some other implementations, each side plate 113 is provided with a third chassis mounting part 117c, which can be configured to install a robot control panel and a charging panel respectively.

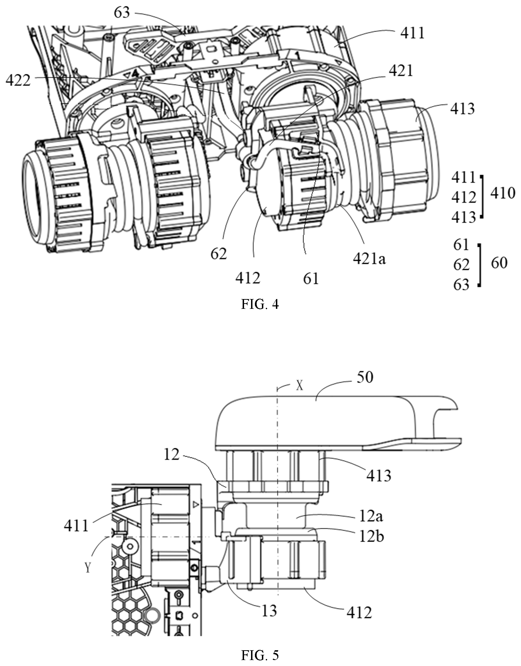

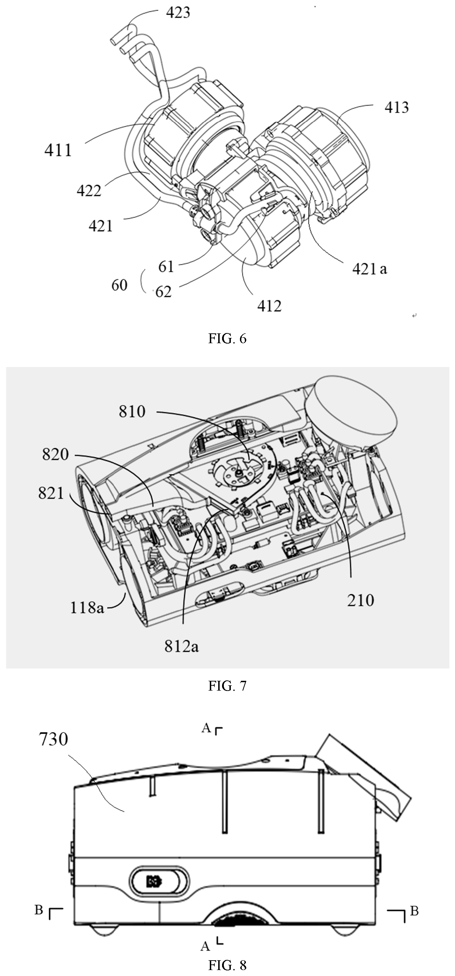

As described in the above content about the driving assembly 410, in addition, the components matched with the driving assembly 410 further include a hidden wiring structure. For quadruped robots and humanoid robots, hidden wiring is particularly important. If the cables are exposed, potential safety hazards may exist. For example, if the robot is hooked by external force during walking, the robot may move irregularly, thereby affecting the person who exerts the external force or the robot itself, and even causing injury to the user or damage to the robot. Fig. 4 shows a schematic diagram of the cooperation between the driving assembly 410 and the hidden wiring structure provided in one implementation; Fig. 5 shows a structural diagram of Fig. 4 in a top view after the locomotion structure 50 is installed and the first cable 421 is removed; Fig. 6 shows a schematic structural diagram of the driving assembly 410 cooperating with the first cable 421, the second cable 422 and the third cable 423 as well as the first limiting member 61 and the second limiting member 62 in one embodiment.

As shown in Fig. 4 and Fig. 5, the output end of the first actuator 411 can drive the locomotion structure 50 to rotate around Y-axis direction, and the output ends of the second actuator 412 and the third actuator 413 both rotate around the X-axis direction. Optionally, the first cable 421 is led out from the third actuator 413 and extends toward the controller 210 side to be connected to the controller 210 to realize the transmission of electrical energy and electrical signals, thereby realizing control and driving. The second cable 422 is led out from the second actuator 412 and extends toward the controller 210 side to be connected to the controller 210 to realize the transmission of electrical energy and electrical signals, thereby realizing control and driving. The third cable 423 is led out from the first actuator 411 and extends toward the controller 210 side to be connected to the controller 210 to realize the transmission of electrical energy and electrical signals, thereby realizing control and driving. Of course, the X-axis and Y-axis mentioned above are only for illustration. In this embodiment, the X-axis and Y-axis are perpendicular to each other. In some optional implementations, they can also be at a certain angle.

The first cable 421 includes a winding section and an outgoing section arranged in sequence. The winding section is wound between the trunk structure 10 and the locomotion structure 50, and the outgoing section extends from the winding section toward the trunk structure 10. The hidden wiring structure in this embodiment is connected to the driving assembly 410, and the hidden wiring structure includes a fixing part configured to fix the outgoing section.

Optionally, the winding section is wound between the third actuator 413 and the second actuator 412. In some embodiments, the trunk structure 10 includes a first connection bracket 12 connecting the second actuator 412 and the third actuator 413. The first connection bracket 12 includes a winding part 12a disposed between the third actuator 413 and the second actuator 412, and the winding section is wound on the winding part 12a. The first connection bracket 12 plays a role in supporting and fixing the third actuator 413. The central axis of the winding section of the first connection bracket 12 is parallel to the first axis X, and the winding section is wound on the winding part 12a in a direction parallel to the first axis X. The trunk structure 10 includes a second connection bracket 13 connecting the first actuator 411 and the second actuator 412, and the second connection bracket 13 plays a role in supporting and fixing the whole of the second actuator 412 and the third actuator 413. The second connection bracket 13 and the first connection bracket 12 can be an integrally formed structure, or an integrally formed structure with the chassis structure 110, as long as they can provide positions for installing the third actuator 413 and the second actuator 412.

As shown in Fig. 5, the first connection bracket 12 further includes an edge part 12b and a transition part. The radial size of the edge part 12b is set to be larger than that of the winding part 12a. The edge part 12b surrounds the outer sides of the third actuator 413 and the second actuator 412, and the transition part is connected between the edge part 12b and the winding part 12a.

When the third actuator 413 rotates in the positive direction of the X-axis under the driving of the second actuator 412, the winding section wound on the winding part 12a will become loose. When the third actuator 413 rotates in the negative direction of the first axis X under the driving of the second actuator 412, the loosely arranged winding section on the winding part 12a will be gradually wound tightly on the winding part 12a along with the rotation of the third actuator 413. Wherein, the winding section can adopt a slingshot line to adapt to continuous loosening and winding.

In some embodiments, the number of winding turns of the winding section is at least two. Optionally, the number of winding turns of the winding section is 2 to 10, and optionally, the number of winding turns of the winding section is 4, 5, 6, or 7. When the number of winding turns of the winding section increases, for the same angular movement range of the third actuator 413, the change in diameter of each turn of the winding section that is loosened or wound tightly is smaller, which is beneficial to the design of the connection bracket and the driving assembly 410 of the trunk structure 10. If the number of winding turns is too large, the distance between the second actuator 412 and the third actuator 413 will increase, which will further increase the size of the robot dog along the X-axis direction, increase the load of the driving assembly 410, and is not conducive to the movement ability of the robot dog. The number of winding turns within the above reasonable range can reduce the distance between the two driving parts, thereby enabling the robot dog to have excellent movement ability and ensuring the rationalized design of the connection bracket in the trunk structure 10.

In some implementations, as shown in Fig. 2 and Fig. 4, the hidden wiring structure 60 includes a third limiting member 63 for limiting the second cable 422 of the second actuator 412 and the first cable 421 of the third actuator 413. The third limiting member 63 realizes the limiting of the first cable 421 and the second cable 422. The third limiting member 63 is provided with at least one mounting cavity for accommodating the first cable 421 and the second cable 422. Specifically, it is provided with two mounting grooves matching the first cable 421 and the second cable 422, and the mounting grooves only need to realize the installation and guidance of the cables. The third limiting member 63 is connected and fixed to the trunk structure 10. The third limiting member 63 accommodates the first cable 421 and the second cable 422 between the second actuator 412 and the controller 210, which ensures the reliable connection between the first cable 421, the second cable 422 and the controller 210, and further guarantees the reliability of the wiring.

In some embodiments, the hidden wiring structure 60 includes at least one of a first limiting member 61, a second limiting member 62, and a third limiting member 63 arranged at intervals for fixing the first cable 421.

In one implementation, as shown in Fig. 1, the hidden wiring structure further includes a joint shell 64, which can cover the driving assembly 410 exposed outside the trunk structure 10, and simultaneously cover the first cable 421 and the second cable 422 exposed outside the trunk structure 10, further ensuring the reliability of the wiring and effectively avoiding the first cable 421 and the second cable 422 being exposed. The joint shell 64 can be specifically in the form of two mutually buckled and fixed covers. Of course, the joint shell 64 can also be in other forms, such as a soft housing made of elastic material covering the outside of the actuator, as long as the external cables and other structures can be hidden.

To realize the heat dissipation of the mounting cavity 14, in one implementation, the robot is further provided with a heat dissipation mechanism 80, as shown in Fig. 7 to Fig. 9, wherein Fig. 7 shows a structural diagram of the robot body after removing part of the feature shell 740, part of housing, and the braking structure 220, Fig. 8 shows a side view of other structures of the robot except the head structure 710 and the locomotion structure 50, Fig. 9 shows a cross-sectional view of Fig. 8 along the A-A direction, and Fig. 10 shows a cross-sectional view of Fig. 8 along the direction from the head to the tail; Fig. 9 shows a cross-sectional view of Fig. 8 along the B-B direction. The heat dissipation mechanism 80 is configured to dissipate heat during the charging and use of the robot to prolong the service life of the robot.

Since the trunk structure 10 needs to shield and protect the battery member 31 and the controller 210, the trunk structure 10 is often designed in a closed manner, and the heat in the mounting cavity 14 is difficult to discharge. The heat dissipation mechanism 80 provided in this embodiment includes a first heat dissipation member 810 and an air outlet structure 820. The first heat dissipation member 810 is connected to the trunk structure 10 and configured in the mounting cavity 14. The trunk structure 10 is provided with a first air inlet 118a, and the first heat dissipation member 810 can drive the gas outside the trunk structure 10 to enter the mounting cavity 14 through the first air inlet 118a. The positions of the first air inlet 118a and the third air outlet 118b indicated in Fig. 3 can be swapped. Whether the air enters from the head side and exits from the tail side, or enters from the tail side and exits from the head side, the heat dissipation scheme in this embodiment can be realized. Moreover, in some implementations, air inlets or air outlets opened from the side plates of the chassis structure or other trunk structure positions can also realize the heat dissipation scheme in this embodiment.

Optionally, the first heat dissipation member 810 is a volute fan. The volute fan adopts a centrifugal design, which can suck air at high speed by rotating the volute and the impeller and send it out at a relatively high pressure, reducing the turbulence of the air flow. The noise generated during high-speed operation is low, and the heat in the mounting cavity 14 can be discharged quickly and effectively. Optionally, the volute fan is compact in design and occupies a small space, which is convenient for installation in the mounting cavity 14.

As shown in Fig. 7, the air outlet structure 820 is configured in the mounting cavity 14, and a first air outlet channel 821 is formed in the air outlet structure 820. The trunk structure 10 includes a first air outlet section 118c. One end of the air outlet structure 820 is connected to the first air outlet section 118c, and the other end is connected to the first heat dissipation member 810. The first heat dissipation member 810 can drive the gas in the mounting cavity 14 to be discharged out of the trunk structure 10 through the first air outlet channel 821.

The arrangement of the first air outlet channel 821 can effectively discharge the gas in the mounting cavity 14 out of the trunk structure 10, realize the exchange of hot and cold gases, complete the heat dissipation inside the mounting cavity 14, and improve the heat dissipation effect.

It should be noted that the air outlet structure 820 can be set separately from the trunk structure 10, or integrally formed with the trunk structure 10, such as the first air outlet channel 821 is formed on the trunk structure 10.

Generally, the temperature of the gas outside the trunk structure 10 is lower than that inside the mounting cavity 14. Through the first heat dissipation member 810 and the air outlet structure 820, the gas outside the trunk structure 10, that is, cold air, can enter the mounting cavity 14 and the gas in the mounting cavity 14 can be discharged out of the trunk structure 10, enhancing the circulation of gas inside and outside the trunk structure 10. Thus, the heat generated by the battery member 31, the controller 210, and other components can be discharged from the mounting cavity 14 in a timely and effective manner. Meanwhile, cold air is continuously supplemented into the mounting cavity 14 through the first air inlet 118a, so that the mounting cavity 14 always maintains a relatively low temperature. This not only improves the heat dissipation effect of the robot but also prolong the service life of the robot. Optionally, since the mounting cavity 14 maintains a relatively low temperature, the heat of the battery member 31 can be discharged in a timely manner, and there is no need to wait for the battery member 31 to cool down during charging, which improves the use safety and user experience.

Optionally, a plurality of first air inlets 118a are configured and arranged along the peripheral side of the battery member 31 or the controller 210, so that the cold air entering through the first air inlets 118a can flow through the surfaces of the heat-generating battery member 31 or the controller 210 and other components to provide supplementary heat dissipation for the battery member 31, the controller 210, and other components. The arrangement of a plurality of first air inlets 118a can increase the amount of cold air entering the mounting cavity 14, and improve the heat dissipation effect for the battery member 31, the controller 210, and the mounting cavity 14.

Specifically, in the embodiment, the battery member 31 can be arranged at the bottom of the mounting cavity 14, the trunk structure 10 is provided with first air inlets 118a at both ends along the length direction of the battery member 31, the controller 210 is arranged above the battery member 31, and the first heat dissipation member 810 and the air outlet structure 820 are arranged above the controller 210. Thus, the cold air from the first air inlets 118a can flow through the battery member 31 and the controller 210 to effectively dissipate heat for the battery member 31 and the controller 210.

In a feasible embodiment, the first air outlet section 118c is configured as an air outlet hole communicating with the first air outlet channel 821. The air outlet end of the air outlet mechanism abuts against the air outlet hole of the trunk structure 10, and the gas in the mounting cavity 14 is discharged out of the trunk structure 10 through the first air outlet channel 821 and the air outlet hole.

In other embodiments, the first air outlet section 118c is configured as a connecting hole for connecting the air outlet structure 820. The air outlet structure 820 is inserted through the connecting hole, and the gas in the mounting cavity 14 is discharged out of the trunk structure 10 through the first air outlet channel 821. It should be noted that the cross-sectional shape of the air outlet structure 820 is not limited, and can be circular, square, or irregular. The extending direction of the air outlet structure 820 is also not limited, as long as the gas sucked by the first heat dissipation member 810 can be discharged out of the trunk structure 10.

Optionally, the cross-sectional size of the air outlet structure 820 becomes larger along the direction of gas outflow, thereby reducing the resistance encountered when the gas flows, facilitating the discharge of gas, improving the ventilation effect, and reducing the wind speed and noise, improving the comfort of the robot. It should be noted that in actual use, the cross-sectional size of the air outlet structure 820 can be changed according to requirements, and can be set to the same cross-sectional size or a decreasing cross-sectional size.

In some embodiments, the first heat dissipation member 810 includes a second air inlet section provided with a second air inlet 811 and a second air outlet section provided with a second air outlet channel 812. The second air inlet section is arranged toward the mounting cavity 14, and the second air outlet section is connected to the air outlet structure 820, so that the second air outlet channel 812 communicates with the first air outlet channel 821. The first heat dissipation member 810 can drive the gas in the mounting cavity 14 to enter through the second air inlet 811 and then the gas is discharged through the second air outlet channel 812 and the first air outlet channel 821. The arrangement of the second air inlet 811 and the second air outlet channel 812 can ensure the discharge of hot air in the first heat dissipation member 810, avoiding the backflow of hot air into the mounting cavity 14 and affecting the heat dissipation effect of the mounting cavity 14.

Optionally, the second air inlet section is arranged toward the third heat dissipation member 840 of the controller 210, so that the heat dissipated by the third heat dissipation member 840 can be effectively discharged through the second air inlet 811, improving the heat dissipation effect of the controller 210, ensuring the normal use of the controller 210, avoiding the frequency reduction or failure of the controller 210, and prolonging the service life of the controller 210.

Optionally, the first heat dissipation member 810 is arranged close to the geometric center of the mounting cavity 14, so that the wind absorbed by the first heat dissipation member 810 can cover a larger range, increase the amount of heat discharged from the mounting cavity 14, and improve the heat dissipation effect.

In some embodiments, the second air outlet channel 812 includes a first air outlet (not shown) and a second air outlet 812a. The first air outlet communicates with the first air outlet channel 821, and the second air outlet 812a is arranged toward the trunk structure 10. The gas discharged from the second air outlet 812a can disturb the gas around the battery member 31 under the guidance of the trunk structure 10.

Generally, the battery member 31 generates heat when in use or charging, and the heat spreads to the gas around the battery member 31. The gas discharged from the second air outlet 812a disturbs the gas around the battery member 31, which can promote the flow of the gas around the battery member 31, thus the air around the battery member 31 is more likely to flow into the mounting cavity 14 and be discharged by the first heat dissipation member 810, thereby indirectly improving the heat dissipation of the battery member 31, improving the heat dissipation effect of the battery member 31, and prolonging the service life of the battery member 31.

Since the battery member 31 is installed at the bottom of the mounting cavity 14, the heat at the bottom of the battery member 31 is difficult to dissipate. Optionally, the air from the second air outlet 812a can reach the bottom of the battery member 31 through the trunk structure 10, disturbing the flow of hot air at the bottom of the battery member 31, and improving the heat dissipation effect at the bottom of the battery member 31. In a feasible embodiment, the trunk structure 10 is designed in an arc shape, which can reduce the power loss when the air from the second air outlet 812a flows, and can disturb the flow of hot air at the bottom of the battery member 31.

In other embodiments, the second air outlet channel 812 includes a first air outlet (not shown) and a second air outlet 812a. The first air outlet is in communication with the first air outlet channel 821. The heat dissipation mechanism 80 further includes a flow disturbing pipe (not shown) configured in the mounting cavsoity 14. A flow disturbing channel is formed in the flow disturbing pipe. One end of the flow disturbing pipe is connected to the second air outlet section, so that the second air outlet 812a communicates with the flow disturbing channel. The other end of the flow disturbing pipe is arranged toward the battery member 31, so that the gas discharged from the second air outlet 812a can disturb the gas around the battery member 31 through the spoiler channel. Optionally, the flow disturbing pipe extends from the second air outlet 812a to the bottom of the battery member 31, disturbing the flow of hot air at the bottom of the battery member 31, and improving the heat dissipation effect at the bottom of the battery member 31.

The arrangement of the flow disturbing pipe can ensure that the air from the second air outlet 812a can disturb the normal flow of the gas around the battery member 31, thus the air around the battery member 31 is more likely to flow into the mounting cavity 14 and be discharged by the first heat dissipation member 810, indirectly improving the heat dissipation of the battery member 31 and the heat dissipation effect of the battery member 31.

In some embodiments, the heat dissipation mechanism 80 further includes a second heat dissipation member 830 for dissipating heat of the battery member 31. The second heat dissipation member 830 is connected to the trunk structure 10 and configured between the battery member 31 and the trunk structure 10. The second heat dissipation member 830 can specifically dissipate heat of the battery member 31, accelerate the heat dissipation of the battery member 31, timely and effectively reduce the temperature of the battery member 31, and improve the heat dissipation effect of the battery member 31. Optionally, the second heat dissipation member 830 is also a volute fan.

In the embodiment disclosed in the present application, the battery member 31 is arranged at the bottom of the mounting cavity 14, and the second heat dissipation member 830 is arranged between the battery member 31 and the trunk structure 10, which can effectively discharge the heat at the bottom of the battery member 31, avoid the temperature rise of the battery member 31 caused by the difficulty in dissipating the heat at the bottom of the battery member 31, and contribute to prolonging the service life of the battery member 31

The cooperative work between the second heat dissipation member 830 and the first heat dissipation member 810 can ensure that when the robot is in use, the temperature of the battery member 31 can always be lower than the safe charging temperature. When the battery member 31 needs to be charged, the protection mechanism of the battery member 31 will not be triggered, enabling timely charging of the battery member 31 and improving the use safety of the battery member 31 as well as the user's comfort experience.

In some embodiments, the second heat dissipation member 830 includes a third air inlet section provided with a third air inlet and a third air outlet section 831 provided with a third air outlet channel 832. The third air inlet section is arranged toward the battery member 31, and the third air outlet section 831 communicates with the air inlet side of the first heat dissipation member 810. The second heat dissipation member 830 can drive the gas outside the trunk structure 10 to enter through the first air inlet 118a and the third air inlet and then the gas is discharged to the air inlet side of the first heat dissipation member 810 through the third air outlet channel 832.

By arranging the third air inlet section toward the battery member 31, the heat of the battery member 31 can be effectively absorbed by the second heat dissipation member 830, avoiding the temperature rise of the battery member 31 when in use, and ensuring that the battery member 31 can be within the safe charging temperature. The second heat dissipation member 830 discharges the heat of the battery member 31 into the mounting cavity 14, and the first heat dissipation member 810 can discharge the heat discharged into the mounting cavity 14 out of the trunk structure 10, so that the heat of the battery member 31 will not be enclosed in the mounting cavity 14, improving the reliability of the heat dissipation of the battery member 31. In a feasible embodiment, a fourth heat dissipation member 850 (mentioned in detail later) is also provided. The third air inlet section is arranged toward the fourth heat dissipation member 850, so that the heat of the battery member 31 absorbed by the fourth heat dissipation member 850 can also be effectively and timely discharged out of the trunk structure 10, ensuring the heat dissipation effect of the battery member 31 and improving the use safety of the battery member 31.

The fourth heat dissipation member 850 is connected to the battery member 31. The fourth heat dissipation member 850 can be a heat sink with strong thermal conductivity and thermal diffusivity. It is configured to collect and discharge the heat generated by the battery member 31, such as the heat generated by the battery member 31 when in use or charging, then reduce the working temperature of the battery member 31, ensure the normal operation of the battery member 31, and prolong the service life of the battery member 31. Generally, the fourth heat dissipation member 850 conducts the heat of the battery member 31 to the fourth heat dissipation member 850 through a thermal conductive material, and improves the heat dissipation efficiency through the large-area surface of the fourth heat dissipation member 850.

In other embodiments, the third air inlet is arranged opposite to the first air inlet 118a, the third air outlet section 831 is arranged toward the battery member 31, and the third air outlet section 831 communicates with the air inlet side of the first heat dissipation member 810. The second heat dissipation member 830 can drive the gas outside the trunk structure 10 to enter through the first air inlet 118a and the third air inlet and discharge air toward the battery member 31 until it is discharged to the air inlet side of the first heat dissipation member 810. Thus, the cold air outside the trunk structure 10 can be directly blown to the battery member 31 to directly cool the battery member 31, improving the heat dissipation effect of the battery member 31.

In other embodiments, the third air inlet is arranged opposite to the first air inlet 118a, the third air outlet section 831 is arranged toward the battery member 31, and the third air outlet section 831 is further configured to be arranged opposite to the third air outlet 118b of the trunk structure 10. The second heat dissipation member 830 can drive the gas outside the trunk structure 10 to enter through the first air inlet 118a and the third air inlet and discharge air toward the battery member 31 until it is discharged out of the mounting cavity 14 through the third air outlet 118b. Thus, the heat of the battery member 31 can be directly discharged out of the mounting cavity 14, improving the heat dissipation effect of the battery member 31.

In some embodiments, as shown in Fig. 11, the heat dissipation mechanism 80 further includes a first guide member 860. An air inlet duct 861 is formed in the first guide member 860c. The first guide member 860c is configured between the battery member 31 and the trunk structure 10. The trunk structure 10 includes a first air inlet section provided with a first air inlet 118a. One end of the first guide member 860c is connected to the first air inlet section, and the other end is connected to the second heat dissipation member 830, so that the gas inside and outside the trunk structure 10 can enter the third air inlet through the first air inlet 118a and the air inlet duct 861.

Optionally, as shown in Fig. 11, the first guide member 860c is two ribs arranged on the trunk structure 10, and the air inlet duct 861 is formed between the two ribs. It should be noted that the first guide member 860c can be set separately or integrally formed with the trunk structure 10. In the embodiment disclosed in the present application, two first air inlets 118a are provided, and correspondingly, two first guide members 860c are provided, which are respectively arranged on both sides of the second heat dissipation member 830 to facilitate the heat dissipation of the battery member 31.

In a feasible embodiment, the air inlet duct 861 gradually narrows along the flow path of the cold air, so that the wind from the air inlet duct 861 can cover the battery member 31 as much as possible and enter the third air inlet to be discharged by the second heat dissipation member 830. Optionally, the first guide member 860c is arranged between the fourth heat dissipation member 850 and the trunk structure 10, so that the heat collected by the fourth heat dissipation member 850 can be discharged.

Through the arrangement of the air inlet duct 861, the cold air from the first air inlet 118a can flow orderly along the surface of the battery member 31 under the action of the second heat dissipation member 830 to dissipate heat of the battery member 31, form heat convection with the battery member 31, and exchange the heat of the battery member 31. Cooperating with the fourth heat dissipation member 850, the temperature of the battery member 31 can be transmitted to the body of the fourth heat dissipation member 850, and the battery member 31 can be dissipated by means of heat conduction, so that the temperature of the battery member 31 will not enter the safe charging protection state during the entire working cycle, improving the user experience.

In some embodiments, the heat dissipation mechanism 80 further includes a second guide member (not shown) in which an air outlet duct is formed. The second guide member is configured between the battery member 31 and the trunk structure 10, and the second guide member is connected to the third air outlet section 831. Through the third air outlet channel 832 and the air outlet duct, the heat discharged by the second heat dissipation member 830 is easily absorbed by the first heat dissipation member 810, so that the heat around the battery member 31 can be continuously discharged, improving the heat dissipation effect of the battery member 31.

Optionally, the air inlet duct 861 is arranged along the length direction of the battery member 31, and the air outlet duct is arranged along the width direction of the battery member 31, so as to avoid the cold air from the air inlet duct 861 and the hot air from the air outlet duct from mixing, which affects the heat dissipation effect of the second heat dissipation member 830 on the battery member 31. Moreover, the arrangement of the air inlet duct 861 and the air outlet duct can discharge the heat generated in the length direction and the width direction of the battery member 31, accelerating the heat dissipation of the battery member 31.

The heat dissipation mechanism 80 includes a third heat dissipation member 840. The third heat dissipation member 840 is connected to the controller 210 and configured to collect and discharge the heat generated by the controller 210, prevent the controller 210 from overheating when in use, ensure the normal operation of the controller 210, and prolong the service life of the controller 210. The arrangement of the third heat dissipation member 840 effectively reduces the temperature on the controller 210, avoids performance degradation or failure caused by overheating, and increases the stability and reliability of the controller 210.

Generally, the third heat dissipation member 840 and the fourth heat dissipation member 850 can further realize the heat exchange between the controller 210 and the battery member 31. The heat generated by the controller 210 and the battery member 31 is respectively dissipated into the mounting cavity 14 by the third heat dissipation member 840 and the fourth heat dissipation member 850.

The present application effectively discharges the heat of the heat-generating components such as the battery member 31 and the controller 210 in the mounting cavity 14 through the arrangement of the third heat dissipation member 840, the fourth heat dissipation member 850, the first heat dissipation member 810, and the second heat dissipation member 830, avoids the frequency reduction or failure of the controller 210, ensures that the temperature of the battery member 31 will not enter the safe charging protection state during the entire working cycle, improves the safety of the battery member 31, and at the same time keeps the mounting cavity 14 at a relatively low temperature, improves the safety of the robot, reduces the possibility of the robot malfunctioning, prolongs the service life of the robot, and improves the user experience.

About the head structure 710 and the environment perception mechanism, Fig. 12 shows a structural diagram of the head structure 710 connected to the matching member and then the head structure 710 is disassembled provided in one implementation, and it is also understood with reference to Fig. 1 to Fig. 3.

The environment perception mechanism is specifically realized through the cooperation of a radar 91, a dynamic object detection member 92, a distance detection member 97, a temperature sensor, a humidity sensor, a camera 93, a touch sensor 94, a voice interaction member, and a display 96. In some implementable implementations, one or a combination of multiple (solutions/technologies) may also be selected for cooperative implementation. Of course, expansions can also be made according to actual usage requirements, as long as the robot's ability to perceive external functions is guaranteed.

In this embodiment, the radar 91 is arranged on the trunk structure 10, as shown in Fig. 1, at the back of the robot. In other optional implementations, it can also be arranged on the head structure 710 of the robot; in this embodiment, the dynamic object detection member 92 is arranged on the head structure 710, specifically on the nose, which can detect surrounding dynamically moving objects. In other optional implementations, it can also be arranged on the trunk structure 10 or the locomotion structure 50 to meet the above functions. At the same time, the dynamic object detection member 92 in this embodiment adopts a millimeter-wave radar 91, and can also be realized by other existing structures; the distance detection member 97 is arranged on the head structure 710, the locomotion structure 50, or the trunk structure 10 of the robot. The position detection member is configured for the walking robot to linearly perceive the surrounding environment. In this embodiment, a plurality of TOF (Time of Flight) sensor structures are arranged to realize distance detection. In other implementable implementations, any other existing structures can also be adopted; the temperature sensor is arranged on the head structure 710, the trunk structure 10, or the locomotion structure 50 of the robot to perceive the temperature of the surrounding environment. The humidity sensor is arranged on the head structure 710, the trunk structure 10, or the locomotion structure 50 of the robot to perceive the humidity of the surrounding environment. In this implementation, a temperature and humidity sensor is configured for integrated detection to perceive temperature and humidity at the same time. The temperature and humidity sensor is arranged at the neck or any position on the trunk or head, and of course, can also be arranged on the locomotion structure 50. The camera 93 is arranged on the head structure 710, the trunk structure 10, or the locomotion structure 50 of the robot to capture images of the surrounding environment and feed back to the controller 210; the touch sensor 94 is arranged on the head structure 710 or the trunk structure 10 of the robot. The touch sensor 94 is configured to feed back a touch signal to the controller 210 after being touched externally. One or more touch sensors 94 can be arranged as long as the feedback can be realized after being touched by the user. It can be arranged at the chin of the head structure 710, the forehead of the head structure 710, or the trunk structure 10, as long as it can be realized, which is not limited here. The voice interaction member is arranged on the head structure 710, the trunk structure 10, or the locomotion structure 50 of the robot. The voice interaction member is configured for external voice input and/or external voice output. The voice interaction member can include a microphone 95 and a speaker 98. As shown in Fig. 2 and Fig. 11, the microphone 95 is arranged in the head structure 710, and the speaker 98 is arranged in the trunk structure 10. The display 96 is arranged on the head structure 710 or the trunk structure 10 of the robot, connected to the controller 210, and configured to externally display patterns or graphics. A plurality of displays 96 can be arranged, and the number is not limited.

To realize the motion feature effect and improve the anthropomorphism of the robot, the robot further includes a feature member 720 as shown in Fig. 1, Fig. 12, and Fig. 13, and Fig. 13 is a schematic structural diagram of the feature member 720 of the robot provided in one implementation.

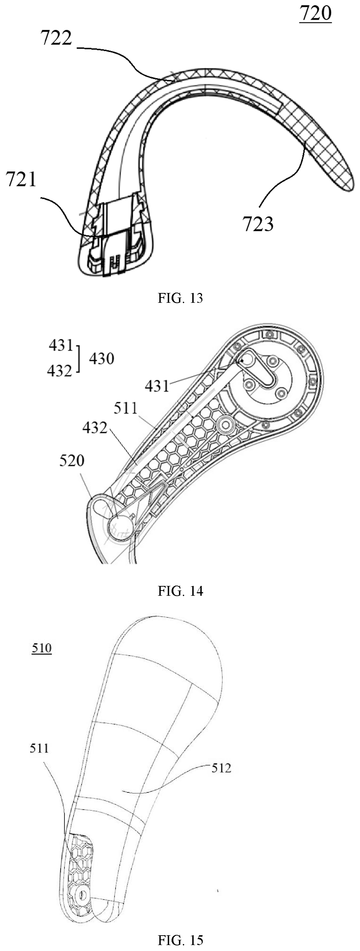

Specifically, as shown in Fig. 13, the feature member 720 provided in this embodiment includes a feature support part 721, a feature transition part 722, and a feature counterweight part 723. The feature support part 721, the feature transition part 722, and the feature counterweight part 723 are integrally formed. Of course, in other optional implementations, the feature support part 721, the feature transition part 722, and the feature counterweight part 723 can be integrally formed together.

As shown in Fig. 13, a feature connecting seat is provided at the lower end of the feature support part 721. The feature transition part 722 is arranged between the feature support part 721 and the feature counterweight part 723, and the feature transition part 722 is bent toward the feature support part 721, so that the feature counterweight part 723 is located on one side of the feature support part 721.

In this embodiment, the feature member 720 is made of TPE, TPU, or rubber material, and the weight of the feature counterweight part 723 is 10%-90% of the total weight of the feature member 720; further, it can be 30%-40%. It can be understood that in some other implementations, as shown in Fig. 3, all the bending positions of the feature member 720 as a whole can be regarded as the feature counterweight portion 723. Alternatively, the feature transition part 722 can also be used as part of the feature counterweight part 723, that is, the right part of the feature support part 721 is set as the feature counterweight part 723, and at this time, the feature counterweight part 723 itself realizes partial bending.

In this embodiment, the feature member 720 is flat. When in use, it is connected to the head structure 710 of the quadruped robot through the feature connecting seat at the lower end of the feature support part 721. Two feature members 720 are arranged as the lug 511b structure of the quadruped robot. Since the TPE, TPU, or rubber material will undergo elastic deformation when stressed, and the feature transition part 722 is bent toward the feature support part 721, during the movement of the quadruped robot, the vibration of the body and the head structure 710 of the robot is transmitted to the feature member 720 arranged thereon, causing the feature transition part 722 on the feature member 720 to undergo elastic deformation, driving the feature counterweight part 723 to shake relative to the feature support part 721, and at this time, the feature transition part 722 is in a shaking state. By arranging two feature members 720 as the lug 511b structure of the head structure 710 of the quadruped robot, the lug 511b structure shakes correspondingly during the movement of the quadruped robot, which can achieve a good and accurate human-robot interaction effect. Wherein, the connection between the feature connecting seat and the head structure 710 of the quadruped robot adopts a clamping method in the prior art. The bottom of the feature connecting seat includes a plurality of protrusions for inserting into a plurality of limiting holes of the head structure 710 of the quadruped robot.

In this embodiment, as shown in Fig. 13, the feature support part 721 and the feature transition part 722 are provided with interconnected cavities inside, the feature counterweight part 723 is solid inside, and the thickness of the inner side of the bent part of the feature transition part 722 is thinner than that of the outer side, so that the tension of the two surfaces is greatly different, and the feature member 720 (that is, the position actually indicated in the figure is the ear structure of the quadruped robot, and can also be the tail structure in some cases) is more likely to shake during the movement of the quadruped robot, achieving a good and accurate human-robot interaction effect.

The feature member 720 provided in this embodiment is connected to the head structure 710 of the quadruped robot. The feature member 720 takes the feature connecting seat at its bottom as the vibration base. Under the combined action of the weight of the feature counterweight part 723 at the front end of the feature member 720, the different wall thickness tensions of the feature transition part 722 area, and the walking vibration frequency of the quadruped robot, the feature member 720 can realize natural up and down vibration, and cooperate with the actions of the quadruped robot to achieve a good and accurate human-robot interaction effect.

To realize the walking function, the locomotion structure 50 specifically includes the following contents, which are shown in sequence in Fig. 14 to Fig. 25. Fig. 14 shows a schematic structural diagram of the thigh member 511 and the calf structure 520 cooperating with the transmission structure 430; the transmission structure 430 is arranged between the calf structure 520 and the third actuator 413. The transmission structure 430 includes a crank 431 and a connecting rod 432. The crank 431 rotates coaxially with the output end of the third actuator 413. One end of the connecting rod 432 is rotatably connected to the crank 431, and the other end is rotatably connected to the calf structure 520. Under the driving of the third actuator 413, the calf structure 520 rotates relative to the thigh structure 510.

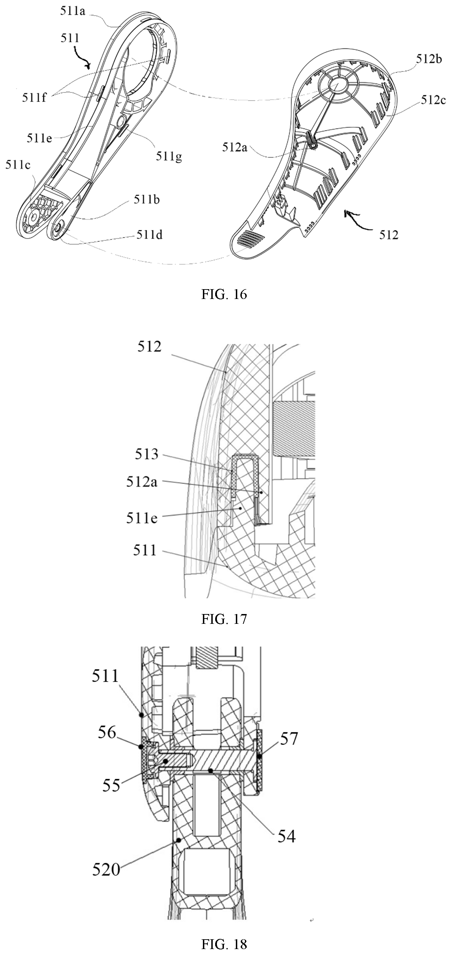

Fig. 15 is a schematic structural diagram of the thigh structure 510 provided in one implementation; Fig. 16 is a structural diagram of the thigh member 511 and the exterior part 512 after being disassembled from Fig. 15; this embodiment provides a thigh structure 510, including a thigh member 511 and an exterior part 512. The thigh member 511 and the exterior part 512 are mutually buckled and connected. Of course, the connection mode is not limited here. The exterior part 512 can protect the thigh member 511, improve the aesthetics of the thigh structure 510, and at the same time, can improve the noise problem caused by component collision during the movement.

As shown in Fig. 16, specifically, the thigh member 511 includes a thigh bracket 511a and a lug 511b integrally connected to the thigh bracket 511a; wherein the thigh bracket 511a is provided with a first shaft hole 511c, the lug 511b is provided with a second shaft hole 511d corresponding to the first shaft hole 511c, and the first shaft hole 511c and the second shaft hole 511d are configured to coaxially install rotating components. The thigh structure 510 provided by the present application simplifies the two components mutually buckled on the thigh in the prior art into one thigh member 511, which can improve the manufacturing precision of the first shaft hole 511c and the second shaft hole 511d, thereby improving the assembly precision of the thigh structure 510 and the calf, reducing the assembly difficulty, and being beneficial to mass production. At the same time, it can reduce the problem of movement collision between the components, and further reduce the problem of high movement noise.

In this embodiment, as shown in Fig. 1, the thigh bracket 511a and the lug 511b form a U-shaped structure, and the cavity formed by the U-shaped structure is configured to install the calf. In other implementations, the thigh bracket 511a and the lug 511b can also be connected to form a Y-shaped or V-shaped structure, and the cavity formed thereby is configured to install the calf.

As shown in Fig. 16, the exterior part 512 has a first seam allowance 512a, and the thigh member 511 has a second seam allowance 511e; in the first seam allowance 512a and the second seam allowance 511e, one is a male seam allowance, and the other is a female seam allowance, and the male seam allowance and the female seam allowance are matched and inserted; the exterior part 512 is provided with a plurality of groups of thigh buckles 512b, the thigh member 511 is provided with thigh clamping grooves 511f corresponding to the thigh buckles 512b, and the thigh buckles 512b and the thigh clamping grooves 511f are mutually clamped. When the exterior part 512 and the thigh member 511 are assembled, the first seam allowance 512a and the second seam allowance 511e are matched and inserted, and the thigh buckle 512b is clamped into the thigh clamping groove 511f, thereby realizing the convenient assembly and reliable connection between the exterior part 512 and the thigh member 511.

In this embodiment, the first seam allowance 512a and the second seam allowance 511e are double seam allowance structures, so that a reliable connection is formed between the exterior part 512 and the thigh member 511. In other implementations, the first seam allowance 512a and the second seam allowance 511e may also be a single seam allowance structure or reverse seam allowance structures.

As shown in Fig. 17, a thigh elastic member 513 is arranged between the first seam allowance 512a and the second seam allowance 511e. The material of the thigh elastic member 513 can be elastic materials such as foam and rubber. The thigh elastic member 513 is arranged at the seam allowance structure, which can isolate the exterior part 512 and the thigh member 511, and effectively reduce vibration noise.

As shown in Fig. 16, the thigh member 511 is provided with a thigh through hole 511g, the exterior part 512 is provided with a thigh locking hole 512c corresponding to the thigh through hole 511g, and a first locking member is installed in the thigh through hole 511g and the thigh locking hole 512c, which contributes to realize the further reliable connection between the exterior part 512 and the thigh member 511.

In this embodiment, the thigh locking hole 512c is a threaded hole, and the first locking member is a screw or bolt. The screw or bolt is passed through the through hole from the outer side of the thigh member 511 and then locked into the threaded hole, so that the fixed connection between the exterior part 512 and the thigh member 511 can be realized.

This embodiment provides a leg component, including the above-mentioned thigh structure 510, the above-mentioned calf structure 520, and a pin shaft assembly. The thigh member 511 and the calf structure 520 are rotatably connected through the pin shaft assembly installed in the first shaft hole 511c and the second shaft hole 511d.

As shown in Fig. 18, the pin shaft assembly includes a connecting pin shaft 54 and a rotating shaft locking member 55 for locking the connecting pin shaft 54; the connecting pin shaft 54 can be installed from one side of the first shaft hole 511c and the second shaft hole 511d, and the rotating shaft locking member 55 is installed from the other side of the two; the rotating shaft locking member 55 is a structure with locking function such as a screw or bolt.

In this embodiment, the connecting pin shaft 54 is sequentially installed through the second shaft hole 511d and the first shaft hole 511c from the side of the second shaft hole 511d, and the rotating shaft locking member 55 is installed through the first shaft hole 511c. The thigh bracket 511a is provided with a buckle cover 56 covering the outside of the rotating shaft locking member 55, and the lug 511b is provided with a protective cover 57 covering the outside of the connecting pin shaft 54. Specifically, the first shaft hole 511c is a stepped hole, including a first stepped part and a second stepped part. The first stepped part is configured to install the rotating shaft locking member 55, and the second stepped part is configured to install the buckle cover 56. The outer side wall of the buckle cover 56 is flush with the outer wall of the thigh bracket 511a, which can not only protect the rotating shaft locking member 55 but also have aesthetics. Specifically, the second shaft hole 511d is a stepped hole, including a third stepped part, which is configured to install the connecting pin shaft 54; the material of the protective cover 57 is elastic materials such as foam and rubber sheet, which is attached to the outer wall of the lug 511b by means of pasting. The protective cover 57 can not only protect the connecting pin shaft 54 but also have aesthetics. In other implementations, the pin shaft is sequentially installed through the first shaft hole 511c and the second shaft hole 511d from the side of the first shaft hole 511c, and the second locking member is installed through the second shaft hole 511d. Correspondingly, the thigh bracket 511a is provided with a buckle cover 56 covering the outside of the pin shaft, and the lug 511b is provided with a protective cover 57 covering the outside of the second locking member.

As shown in Fig. 14 and Fig. 16, the thigh member 511 is provided with mounting holes arranged along the circumference for installing the third actuator 413, and a transmission structure 430 is connected between the thigh member 511 and the calf structure 520.

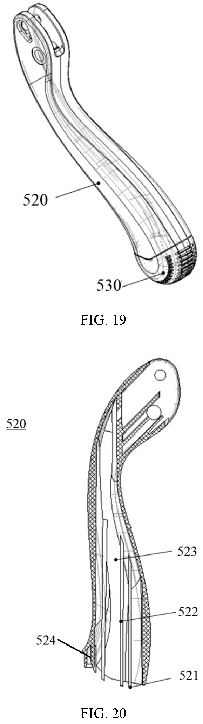

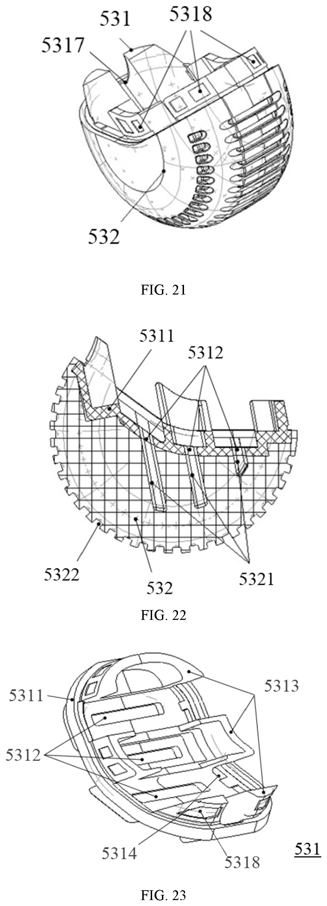

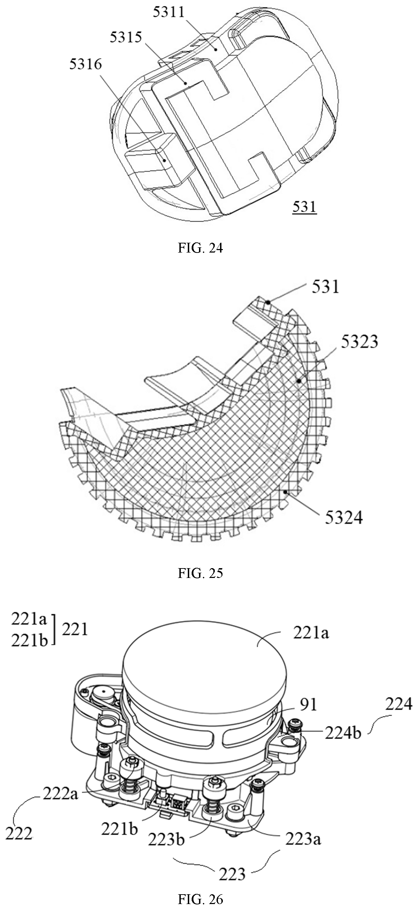

As shown in Fig. 19 and Fig. 21 to Fig. 25, Fig. 21 shows a schematic structural diagram of the sole structure 530; Fig. 22 shows a cross-sectional view of the sole structure 530; Fig. 23 shows a schematic structural diagram of the insert 531 in a certain perspective; Fig. 24 shows a schematic structural diagram of the insert 531 in another perspective; Fig. 25 shows a cross-sectional view of the sole structure 530.

The sole structure 530 provided in this embodiment, as shown in Fig. 21 and Fig. 22, includes an insert 531 and a sole elastic member 532. In one implementable implementation, the sole elastic member 532 and the insert 531 are integrally formed. The sole elastic member 532 is provided with one or more cavity grooves 5321; the insert 531 is provided with one or more insert 531 through holes, and each insert 531 through hole is communicated with each cavity groove 5321 in one-to-one correspondence.

In one implementation of this embodiment, the outer surface of the sole elastic member 532 is provided with one or more rows of elastic grooves 5322, which have the functions of increasing elasticity, increasing friction, and reducing weight. The material of the sole elastic member 532 can be elastic materials such as rubber and silica gel. When manufacturing the sole structure 530 provided in this embodiment, the insert 531 is put into the mold of the sole elastic member 532 and vulcanized and formed together with the raw material of the sole elastic member 532; the mold of the sole elastic member 532 has protrusions corresponding to the through holes of the insert 531. Therefore, after the sole elastic member 532 is vulcanized and formed, cavity grooves 5321 communicated with each insert 531 through hole in one-to-one correspondence will be formed in the sole elastic member 532. After vulcanization, the bonding force between the insert 531 and the sole elastic member 532 is strong, and when the hardness of the material itself is improved, the overall hardness of the sole structure 530 can be reduced through the cavity grooves 5321, the functional requirements of both wear resistance and noise reduction for the sole are realized.

In another implementable sole structure 530, as shown in Fig. 25, the insert 531 and the sole elastic member 532 are not integrally formed. The sole structure 530 includes an insert 531 and a sole elastic member 532. The sole elastic member 532 includes a first elastic body 5323 pasted on the bottom surface of the insert 531 and a second elastic body 5324 pasted on the bottom surface of the first elastic body 5323.

As shown in Fig. 23 and Fig. 24, the insert 531 includes an insert body 5311. The bottom surface of the insert body 5311 is provided with a special-shaped convex block 5315 and a limiting block 5316. The upper surface of the first elastic body 5323 is provided with a first pasting surface attached to the bottom surface of the insert body 5311, a special-shaped groove matched with the special-shaped convex block 5315, and a limiting groove matched with the limiting block 5316. The lower surface of the first elastic body 5323 is provided with a second pasting surface in an arc shape. The second elastic body 5324 is provided with a groove matched with the shape of the bottom surface of the first elastic body 5323. After the insert 531, the first elastic body 5323, and the second elastic body 5324 are separately formed, the first pasting surface, the surface of the special-shaped groove, and the surface of the limiting groove of the first elastic body 5323 are respectively bonded to the bottom surface of the insert body 5311, the surface of the special-shaped convex block 5315, and the surface of the limiting block 5316 in one-to-one correspondence through an adhesive process, so as to realize the firm connection between the first elastic body 5323 and the insert 531; then, the second elastic body 5324 is wrapped and pasted on the outside of the second pasting surface of the first elastic body 5323 through an adhesive process, so as to realize the firm connection between the second elastic body 5324 and the first elastic body 5323.

In one implementation of this embodiment, as shown in Fig. 25, the materials of the first elastic body 5323 and the second elastic body 5324 are different. The first elastic body 5323 is made of a material with high elasticity, soft material, and good noise reduction performance, and the second elastic body 5324 is made of a material with high hardness and good wear resistance, such as rubber and silica gel. The hardness of the second elastic body 5324 is greater than that of the first elastic body 5323, the elasticity of the first elastic body 5323 is greater than that of the second elastic body 5324, and the wear resistance of the second elastic body 5324 is greater than that of the first elastic body 5323. Through the combination of the first elastic body 5323 and the second elastic body 5324, the functional requirements of both wear resistance and noise reduction for the sole structure 530 are realized.

In one implementation of this embodiment, as shown in several transverse slots and holes at the bottom of Fig. 21, the outer surface of the sole elastic member 532 is provided with one or more rows of elastic grooves 5322, which have the functions of increasing elasticity, increasing friction, and reducing weight.

As shown in Fig. 19 and Fig. 20, Fig. 20 shows a cross-sectional view of the calf structure 520; in the calf structure 520, the calf structure 520 is a cavity structure. The inner wall of the calf structure 520 is provided with two or more convex ribs 522. The design of the calf cavity 523 can reduce the weight of the leg structure, and the design of the convex ribs 522 can enhance the strength and rigidity of the leg structure to meet the use requirements.

In one implementation of this embodiment, the convex rib 522 extends along the length direction of the calf structure 520, and the tail part is provided with a calf limiting member 521 extending out of the calf structure 520. The insert 531 is provided with an insert limiting member 5314 corresponding to the calf limiting member 521; in the calf limiting member 521 and the insert limiting member 5314, one is a buckle, and the other is a clamping groove, and the buckle and the clamping groove are mutually clamped. The calf limiting member 521 and the insert limiting member 5314 in this structural form are hidden interfaces, and there is no design of fasteners on the appearance surface of the leg structure, which maximally retains the exquisite design of the product's appearance
In this embodiment, the calf limiting member 521 is a buckle, and the insert limiting member 5314 is a clamping groove. The buckle of the calf structure 520 is inserted into the clamping groove of the insert 531 to realize mutual clamping, and the edge of the calf structure 520 close to the sole structure 530 is smoothly connected with the outer contours of the insert 531 and the sole elastic member 532, so that the installation of the calf structure 520 and the sole structure 530 can be completed, and the operation is simple.

In other specific implementations, the first limiting member 61 is a clamping groove, and the second limiting member 62 is a buckle; or part of the first limiting members 61 are clamping grooves, and the other part of the first limiting members 61 are buckles. Correspondingly, the second limiting members 62 are also a combination of buckles and clamping grooves, as long as the installation of the calf and the sole structure 530 can be realized.

To further enhance the installation reliability of the calf and the sole structure 530, a calf locking hole 524 is provided at the junction of the calf structure 520 and the insert 531. The insert 531 is provided with an insert locking hole 5317 corresponding to the calf locking hole 524, and a locking member is installed in the calf locking hole 524 and the insert locking hole 5317.

In this embodiment, a threaded hole is provided at the junction of the calf structure 520 and the insert 531. The insert 531 is provided with a through hole corresponding to the threaded hole. A screw is passed through the through hole and locked into the threaded hole to complete further fastening installation.

In one implementation, the insert 531 is provided with an insert guide member 5313. The calf structure 520 is provided with a calf guide member corresponding to the insert guide member 5313; in the insert guide member 5313 and the calf guide member, one is a guide convex block, and the other is a guide groove, and the guide convex block and the guide groove are inserted into each other to realize the guiding insertion of the calf and the insert 531, improving the installation convenience.

**In** this embodiment, the insert guide member 5313 is a guide convex block, and the calf guide member is a guide groove.

**In** other specific implementations, the first guide member 860c may be a guide groove, and the calf guide member is a guide convex block.

The guide convex block in this embodiment is three arc-shaped convex blocks, which can be directly inserted into the guide grooves formed between the convex ribs 522 on the inner wall of the calf structure 520. In other specific implementations, the guide convex block may also be a complete convex ring, or two or more spaced arc-shaped convex blocks, special-shaped convex blocks 5315, etc., as long as the guiding insertion between the insert 531 and the inner wall of the calf structure 520 can be realized.

**In** one implementation of this embodiment, the mating surface of the insert guide member 5313 and/or the calf guide member is provided with a plurality of glue grooves 5318 for accommodating glue. In this embodiment, glue grooves 5318 are disposed on the outside of the guide protrusions of the of the insert 531, which facilitate the accommodation of glue and the adhesive curing with glue between the mating surfaces of the calf structure 520 and the insert 531. This assembly method features good assemblability and can meet the requirements of mass assembly production.

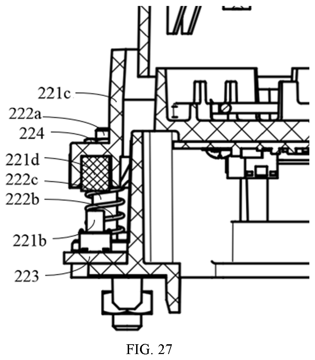

As shown in Fig. 1, Fig. 2, Fig. 26, and Fig. 27, the braking structure 220 in the robot is shown. Fig. 26 is a schematic structural diagram of the braking structure 220 cooperating with the radar 91 provided in one implementation; Fig. 27 is a cross-sectional view along the switch body 221b in Fig. 26. Wherein, the braking structure 220 is configured to control the on-off of the circuit connected to the braking structure 220. In the present application, the braking structure 220 cooperates with the radar 91 to realize braking. Of course, it can also be arranged at other positions of the trunk structure 10, or on the head structure 710 or the locomotion structure 50. In order to realize pressing braking, a separate button structure can also be adopted, and of course, it can also be arranged on the feature member. For example, when the feature member is pulled, the braking function is realized. Of course, the specific implementation method and implementation position are not limited here, as long as the corresponding braking function can be realized. As an understanding, the braking function triggered by pressing the radar housing disposed on the back of the quadruped robot is used as the basis for the following description.

Specifically, the braking structure 220 includes a braking mounting assembly 223, a trigger assembly 221, and at least one reset assembly 222. In actual production, a plurality of reset assemblies 222 may be provided, and all reset assemblies 222 are evenly arranged along the peripheral direction of the trigger assembly 221, which can effectively improve the reset capability of the reset assemblies 222. In the embodiment of the present application, only two reset assemblies 222 are provided for each braking structure 220 as an example for introduction.

As shown in Fig. 26, the braking mounting assembly 223 includes a braking mounting seat 223a for mounting the trigger assembly 221 and the reset assembly 222. Specifically, the braking mounting seat 223a of the braking structure 220 can be connected to the fourth connection bracket 116 by means of inserting or threaded connection, so as to realize the detachable connection between the braking structure 220 and the trunk structure 10, so that the same braking structure 220 can be applied to different trunk structures 10.

As shown in Fig. 26, the trigger assembly 221 includes a moving member 221a and at least one switch body 221b. All switch bodies 221b are evenly arranged along the peripheral direction of the moving member 221a, and all switch bodies 221b are connected in parallel. When triggering, even if there is a deviation in pressing, as long as the moving member 221a can press one of the switch bodies 221b, triggering can still be realized, thereby realizing emergency braking. In the embodiment of the present application, a plurality of switch bodies 221b are set, which can effectively reduce the situation that the switch body 221b cannot be pressed in time during braking, resulting in braking failure, thereby improving the reliability of the triggering of the braking structure 220.

Specifically, the moving member 221a and any of the above-mentioned switch bodies 221b are arranged at intervals along the first direction, wherein the first direction is the direction of pressing the switch. As an understanding, it can be the vertical direction. In fact, as long as the direction of pressing the switch can be used as the first direction, as long as the switch body 221b can be connected to the braking mounting seat 223a by means of clamping or bolt connection, the above-mentioned vertical direction is not the only implementation manner in this embodiment. The reset assembly 222 is connected between the braking mounting seat 223a and the moving member 221a and can expand and contract along the first direction. The reset assembly 222 always provides a pushing force for the moving member 221a to move away from the braking mounting seat 223a. In some manners, the relative expansion and contraction of the braking mounting seat and the moving member by the reset assembly is not limited to the first direction, and may also be at a certain angle to the first direction. The first direction is described in this embodiment only for the convenience of understanding, not as the only limitation.

During the actuation of the radar by pressing, the moving member 221a includes a first position and a second position arranged at intervals along the first direction, and the first position is closer to the braking mounting seat 223a than the second position. In this embodiment, the first direction may be the pressing direction of the switch body 221b.

In the actual use process, when the moving member 221a is subjected to pressure applied by the operator, it moves toward the first position under the action of the pressure. During the process, the reset assembly 222 is compressed by force until the moving member 221a reaches the first position. At this time, the moving member 221a triggers the switch body 221b, and the circuit is in an open state. After braking is completed, when the circuit needs to be turned on again, the operator needs to press another set start button. Simply moving the moving member 221a away from the first position cannot realize the turn-on of the circuit.

When the moving member 221a is not subjected to pressure or is only mistakenly touched, since the reset assembly 222 always provides a pushing force for the moving member 221a to move away from the braking mounting seat 223a, the moving member 221a moves away from the braking mounting seat 223a under the pushing action of the reset assembly 222 and finally stabilizes at the second position. At this time, the moving member 221a is separated from the switch body 221b, and the circuit is in a conducting state.

The switch body 221b in the embodiments of the present application is a micro-switch with low cost and excellent robustness. The actuation travel is only 0.3mm to 0.5mm, which is very easy to trigger and can quickly cut off the circuit once a force is applied.

The reset assembly 222 includes a connecting member 222a connected between the trigger assembly 221 and the braking mounting seat 223a, and the connecting member 222a extends and is arranged along the first direction. The connecting member 222a in the embodiment of the present application is a common shaft bolt, and only the upper half of the connecting member 222a is threaded, and the lower half is a polished rod.

Specifically, the connecting member 222a includes a first end and a second end disposed opposite to each other along the first direction. The brake mount 223a is provided with a fitting hole at a position corresponding to the first end, and the moving member 221a is provided with a through hole extending there through along the first direction at a position corresponding to the second end, such that the moving member 221a is movably connected to the connecting member 222a. The first end of the connecting member 222a is in interference fit with the braking mounting seat 223a by means of the matching hole to realize the preliminary installation of the connecting member 222a. The second end passes through the through hole and abuts against an inner wall of the through hole, thereby further restricting the position of the connecting member 222a.

Of course, in other embodiments, the connecting member 222a may also be a common screw, with threads extending from the first end to the second end of the connecting member 222a. A threaded hole is provided on the braking mounting seat 223a corresponding to the first end. A through hole is provided on the moving member 221a corresponding to the second end along the first direction, so that the moving member 221a is movably connected to the connecting member 222a. The first end of the connecting member 222a is threadedly connected to the braking mounting seat 223a via the threaded hole, which can also realize the preliminary installation of the connecting member 222a.

The reset assembly 222 further includes a biasing return member 222b sleeved on the side wall of the connecting member 222a. Along the first direction, one end of the biasing return member 222b abuts against the moving member 221a, and the other end abuts against the braking mounting seat 223a. Under the elastic force of the biasing return member 222b, the moving member 221a always maintains a tendency to move toward the second position.

It can be understood that when the connecting member 222a is long enough, even if there is a reverse elastic force applied by the biasing return member 222b after the operator presses the moving member 221a, the connecting member 222a will not slip off the moving member 221a.

The biasing return member 222b in the embodiment of the present application is specifically a spring. The required actuating force of the biasing return member 222b is between 30N and 50N, that is, the switch body 221b can be triggered only when the required actuating force of the biasing return member 222b is reached, which can reduce the situation that the moving member 221a is mistakenly touched and thus the switch body 221b is mistakenly triggered to a certain extent.

In some embodiments, the reset assembly 222 further includes a guide member 222c sleeved on the connecting member 222a along the first direction, and the biasing return member 222b is sleeved on the side wall of the guide member 222c along the first direction. Along the first direction, one end of the guide member 222c away from the braking mounting seat 223a can pass through the through hole on the moving member 221a, so that the moving member 221a is movably connected to the guide member 222c. The guide member 222c in the embodiment of the present application is specifically a guide pin shaft, which plays a guiding role during the expansion and contraction of the biasing return member 222b.

In addition, when the moving member 221a moves under pressure, even if the force is not from the first direction, the biasing return member 222b may be slightly twisted. In severe cases, it may cause friction or collision between the biasing return member 222b and the thread on the side wall of the connecting member 222a, and even cause wear of the screw rod or obstruction of the movement of the moving member 221a.

However, in the embodiment of the present application, the guide member 222c is arranged between the biasing return member 222b and the connecting member 222a. The side wall of the guide member 222c is smooth, which can effectively reduce the obstruction of the movement of the moving member 221a and further improve the reliability of the triggering of the braking structure 220.

In addition, in order to reduce the torsion of the biasing return member 222b during expansion and contraction, in some embodiments, the braking mounting assembly 223 further includes a braking limiting part 223b integrally formed on the end surface of the braking mounting seat 223a close to the biasing return member 222b. The braking limiting part 223b can be used alone, or can cooperate with the guide member 222c in the previous embodiment to realize the guiding function of the biasing return member 222b together, so that the movement of the biasing return member 222b more stable.

The braking limiting part 223b in the embodiment of the present application adopts an annular structure design. The braking limiting part 223b is arranged along the peripheral direction of the biasing return member 222b. The outer ring of one end of the biasing return member 222b close to the braking mounting seat 223a abuts against the inner ring of the seat. The braking limiting part 223b limits the movement of the biasing return member 222b on the braking mounting seat 223a, improves the stability of the biasing return member 222b during expansion and contraction, and further improves the reliability of the triggering of the braking structure 220.

As shown in Fig. 26 and Fig. 27, in some embodiments, the braking structure 220 further includes a switch limiting assembly 224 for limiting the stroke of the moving member 221a in the first direction.

The switch limiting assembly 224 includes at least one first switch limiting member 224a, and the first switch limiting members 224a are arranged in one-to-one correspondence with the connecting members 222a. The first switch limiting member 224a in the embodiment of the present application is a common nut. The second end of the connecting member 222a passes through the moving member 221a and is threadedly connected to the first switch limiting member 224a, so that the moving member 221a is not easy to slip off the connecting member 222a during the movement, improving the stability of the moving member 221a during the movement.

In addition, after the first switch limiting member 224a is locked, it can abut against one end of the guide member 222c away from the braking mounting seat 223a, realizing the fixation of the position of the guide member 222c in the first direction and improving the stability of the structure of the reset assembly 222.

Continuing to refer to Fig. 26, in some embodiments, the switch limiting assembly 224 further includes at least one second switch limiting member 224b. In order to improve the stability of the braking structure 220 during triggering, all limiting members in the embodiment of the present application are evenly arranged along the peripheral edge of the moving member 221a, so that the moving member 221a is stressed evenly.

Specifically, the second switch limiting member 224b is arranged on one side of the braking mounting seat 223a close to the moving member 221a and connected to the braking mounting seat 223a. The second switch limiting member 224b protrudes from the end surface of the braking mounting seat 223a facing the moving member 221a. An accommodating groove for accommodating the second connecting member 222a is provided on the moving member 221a corresponding to the second switch limiting member 224b.

When the moving member 221a is located at the first position, the second switch limiting member 224b is accommodated in the accommodating groove, and the second switch limiting member 224b abuts against the groove wall of the accommodating groove, so that the moving member 221a cannot continue to move toward the switch body 221b, thereby reducing the possibility that the switch body 221b is subjected to excessive abutment and even sustains damage, and further prolonging the service life of the braking structure 220.

Optionally, the moving member 221a in the embodiment of the present application includes a moving support part 221c and at least one moving abutting part 221d. All moving abutting parts 221d are arranged in one-to-one correspondence with all switch bodies 221b to trigger the switch bodies 221b.

The moving abutting part 221d in the embodiment of the present application is made of a rubber material with a certain hardness, and the rubber hardness is controlled between 30HSA and 80HSA. Optionally, rubber with a hardness of 60HSA is used. It avoids direct contact between rigid materials and the switch body 221b, which affects the service life of the switch body 221b, thereby further reducing the possibility that the switch body 221b is damaged due to excessive abutment.

In addition, the moving support part 221c in the embodiment of the present application adopts a cylindrical structure. All moving abutting parts 221d and all switch bodies 221b are respectively evenly arranged along the peripheral direction of the moving support part 221c, thereby increasing the possibility of quickly pressing the switch body 221b during the braking process of the braking structure 220.

As shown in Fig. 26 and Fig. 27, in addition, in order to enhance the stability of the connection between the moving support part 221c and the moving abutting part 221d, an embedding space is provided on the moving support part 221c in the embodiment of the present application. The embedding space penetrates through the end surface of the moving support part 221c facing the braking mounting seat 223a along the first direction. A part of the moving abutting part 221d is embedded in the embedding space, which increases the contact area with the moving support part 221c, thereby improving the stability of the connection between the two.

The remaining part of the moving abutting part 221d passes through the installation space and protrudes from the end surface of the moving support part 221c facing the braking mounting seat 223a. During the movement of the moving member 221a, even if excessive triggering occurs, only the flexible moving abutting part 221d can contact the braking mounting seat 223a and the switch body 221b. A gap is always left between the moving support part 221c and the braking mounting seat 223a to prolong the service life of the braking structure 220.

In addition, when the moving abutting part 221d is installed, glue can also be applied to the surface of the part embedded in the embedding space to further improve the stability of the connection between the moving abutting part 221d and the moving support part 221c.

In other embodiments, in order to improve the stability of the connection between the moving abutting part 221d and the moving support part 221c, a limiting rib can also be provided in the embedding space. By using the elastic characteristic of the moving abutting part 221d, the limiting rib is in interference connection with the moving abutting part 221d.

In some embodiments, the quadruped robot further includes a signal transceiver for receiving and transmitting various signals. The signal transceiver in the embodiment of the present application is optionally a radar 91. The moving support part 221c of the braking structure 220 has an accommodating space, and the signal transceiver is installed in the accommodating space.

In the embodiment of the present application, the moving support part 221c covers the signal transceiver, which can replace the protective shell of the signal transceiver, realizing the integration between the moving support part 221c and the protective shell of the signal transceiver, thereby reducing the number of components required for manufacturing the quadruped robot and lowering the production cost.

The technical features of the above embodiments can be combined arbitrarily. In order to make the description concise, all possible combinations of the technical features in the above embodiments are not described. However, as long as there is no contradiction between the combinations of these technical features, they should be considered as the scope described in this specification.

The above embodiments only express several implementations of the present application, and their descriptions are relatively specific and detailed, but they cannot be understood as limitations on the scope of the patent application. It should be pointed out that for those of ordinary skill in the art, without departing from the concept of the present application, a number of deformations and improvements can also be made, which all belong to the protection scope of the present application. Therefore, the protection scope of this patent application shall be subject to the appended claims.

## Claims

1. A robot, **characterized by** comprising:
a trunk structure (10) having a mounting cavity (14);
a controller (210) mounted in the mounting cavity (14);
a charging structure connected to the trunk structure (10) and electrically connected to the controller (210), the charging structure is configured to supply power to the controller (210); and
a driving assembly (410) and a locomotion structure (50), the driving assembly (410) is electrically connected to the controller (210) and mounted on the trunk structure (10), the locomotion structure (50) is connected to an output end of the driving assembly (410), and the driving assembly (410) is controlled by the controller (210) to drive the locomotion structure (50) to move.

2. The robot according to claim 1, **characterized in that** the driving assembly (410) comprises a first actuator (411), a second actuator (412), and a third actuator (413);
wherein the first actuator (411) is mounted on the trunk structure (10), the first actuator (411) is configured to drive the movement of a hip joint of the robot;
an output end of the first actuator (411) is connected to an input end of the second actuator (412), an output end of the second actuator (412) is connected to a thigh structure (510) of the locomotion structure (50), and the second actuator (412) is configured to drive the movement of the thigh structure (510);
the output end of the second actuator (412) is further configured to be movably connected to an input end of the third actuator (413), an output end of the third actuator (413) is connected to the calf structure (520), the third actuator (413) is configured to drive the movement of the calf structure (520), the calf structure (520) is rotatably connected to the thigh structure (510).

3. The robot according to claim 2, **characterized in that** the robot further comprising a hidden wiring structure configured to hide a first cable (421) between the third actuator (413) and the controller (210), the hidden wiring structure comprising:
a first limiting member (61) disposed on a first surface of the second actuator (412), the first limiting member (61) is configured to guide the first cable (421) to extend along the first surface;
a second limiting member (62) disposed on a second surface of the second actuator (412), the second limiting member (62) is configured to guide the first cable (421) to extend along the second surface;
and/or,
further comprising a hidden wiring structure configured to hide the first cable (421) between the third actuator (413) and the controller (210) and/or a second cable (422) between the second actuator (412) and the controller (210), the hidden wiring structure comprising:
a third limiting member (63) connected to the trunk structure (10), the third limiting member (63) has a plurality of fixing parts for accommodating the first cable (421) and/or the second cable (422);
and/or,
further comprising a hidden wiring structure, the hidden wiring structure further comprising a joint shell (64) disposed between the locomotion structure (50) and the trunk structure (10), the joint shell (64) is configured to cover the driving assembly (410) exposed outside the trunk structure (10), the first cable (421) between the third actuator (413) and the controller (210) exposed outside the trunk structure (10), and the second cable (422) between the second actuator (412) and the controller (210) exposed outside the trunk structure (10).

4. The robot according to claim 2, **characterized in that** the robot further comprising a transmission structure (430) disposed between the calf structure (520) and the third actuator (413), the transmission structure (430) comprising a crank (431) and a connecting rod (432), the crank (431) rotating coaxially with an output end of the third actuator (413), one end of the connecting rod (432) being rotatably connected to the crank (431) and the other end being rotatably connected to the calf structure (520), and the calf structure (520) rotating relative to the thigh structure (510) under the driving of the third actuator (413).

5. The robot according to any one of claims 1-4, **characterized in that** the locomotion structure (50) comprises a thigh structure (510), a calf structure (520), and a sole structure (530), the thigh structure (510) is rotatably connected to the calf structure (520), the sole structure (530) is disposed on a side of the calf structure (520) away from the thigh structure (510), and the sole structure (530) comprises an insert (531) and a sole elastic member (532);
wherein the insert (531) and the sole elastic member (532) are integrally formed; or the insert (531) and the sole elastic member (532) are fixedly connected by a connecting member (222a); or the sole elastic member (532) further comprises a first elastic body (5323) and a second elastic body (5324), the first elastic body (5323) is fixedly connected to the insert (531), and the insert (531) is fixedly connected to the first elastic body (5323), and the first elastic body (5323) and the second elastic body (5324) are made of different materials;
and/or,
the thigh structure (510) comprises a thigh member (511), the thigh member (511) comprises a thigh bracket (511a) and a lug (511b) integrally connected to the thigh bracket (511a), the thigh bracket (511a) is provided with a first shaft hole (511c), the lug (511b) is provided with a second shaft hole (511d) corresponding to the first shaft hole (511c), and the first shaft hole (511c) and the second shaft hole (511d) are configured to assemble a driving component.

6. The robot according to any one of claims 1-4, **characterized in that** the charging structure is mounted on the trunk structure (10), the charging structure comprises a battery member (31) and a charging connecting member (222a), the battery member (31) is configured to store electrical energy and connected to the controller (210), and the charging connecting member (222a) is configured to electrically connect to an external electrical connecting member (222a) to charge the battery member (31);
or,
the charging structure is mounted on the trunk structure (10), the charging structure comprises a battery member (31) and a charging connecting member (222a), the battery member (31) is configured to store electrical energy and connected to the controller (210), the charging connecting member (222a) is configured to electrically connect to an external electrical connecting member (222a) to charge the battery member (31), the trunk structure (10) comprises a battery member pressing plate, the mounting pressing plate (32) and the trunk structure (10) form a cavity for accommodating the battery member (31) of the charging structure, and the charging connecting member (222a) is disposed on an outer surface of the trunk structure (10).

7. The robot according to claim 6, **characterized in that** the robot further comprising a heat dissipation mechanism (80) for dissipating heat of the mounting cavity (14), the heat dissipation mechanism (80) comprising:
a first heat dissipation member (810) and an air outlet structure (820), the first heat dissipation member (810) is disposed on the trunk structure (10) close to the controller (210), the air outlet structure (820) has a first air outlet channel (821), the first heat dissipation member (810) is configured to drive the gas outside the trunk structure (10) to enter the mounting cavity (14) and then the gas is discharged out of the housing through the first air outlet channel (821);
and/or,
a second heat dissipation member (830) disposed close to the battery member (31) for dissipating heat from the battery member.

8. The robot according to any one of claims 1-4, **characterized in that** the robot further comprising an environment perception mechanism, the environment perception mechanism comprising:
at least one radar (91) disposed on the trunk structure (10) or a head structure (710) of the robot;
and/or,
at least one dynamic object detection member (92) disposed on the trunk structure (10) or the head structure (710) of the robot, the dynamic object detection member (92) is configured to detect surrounding dynamically moving objects;
and/or,
a distance detection member (97) disposed on the head structure (710), the locomotion structure (50), or the trunk structure (10) of the robot, the position detection member is configured to enable the locomotion robot to linearly perceive the surrounding environment;
and/or,
at least one temperature sensor disposed on the head structure (710), the trunk structure (10), or the locomotion structure (50) of the robot, the temperature sensor is configured to perceive the temperature of the surrounding environment;
and/or,
at least one humidity sensor disposed on the head structure (710), the trunk structure (10), or the locomotion structure (50) of the robot, the humidity sensor is configured to perceive the humidity of the surrounding environment;
and/or,
a camera (93) disposed on the head structure (710), the trunk structure (10), or the locomotion structure (50) of the robot, the camera (93) is configured to capture images of the surrounding environment and feed back to the controller (210);
and/or,
at least one touch sensor (94) disposed on the head structure (710) or the trunk structure (10) of the robot, the touch sensor (94) is configured to feed back a touch signal to the controller (210) after being touched externally;
and/or,
at least one voice interaction member disposed on the head structure (710), the trunk structure (10), or the locomotion structure (50) of the robot, the voice interaction member is configured for external voice input and/or external voice output;
and/or,
at least one display (96) disposed on the head structure (710) or the trunk structure (10) of the robot, the display (96) is connected to the controller (210) and is configured to externally display patterns or graphics.

9. The robot according to any one of claims 1-4, **characterized in that** the robot further comprising at least one feature member (720) disposed on the head structure (710), the trunk structure (10), or the locomotion structure (50) of the robot, the feature member (720) comprising a connected feature support part (721), a feature transition part (722), and a feature counterweight part (723), the feature support part (721) is configured to be connected to the trunk structure (10); one end of the feature transition part (722) is connected to the feature support part (721), and the other end of the feature transition part (722) is bent and connected to the feature counterweight part (723), the feature transition part (722) has a shaking state in which it undergoes elastic deformation under external force to drive the feature counterweight part (723) to shake relative to the feature support part (721);
and/or,
further comprising at least one identification member (750) disposed on the head structure (710), the trunk structure (10), or the locomotion structure (50) of the robot, the identification member (750) is configured to identify the robot;
and/or,
the trunk structure (10) comprising a chassis structure (110), the chassis structure (110) comprising a base plate (115), at least one pair of oppositely disposed side plates (113), and at least one pair of oppositely disposed end plates (114), the side plates (113) are connected to the base plate (115), the end plates (114) are connected to the base plate (115), two ends of any side plate (113) are respectively connected to the two end plates (114), the end plates (114) are configured to mount moving components, all the side plates (113), all the end plates (114), and the base plate (115) together enclose the mounting cavity (14) with at least one side open;
and/or,
further comprising a housing member (730) covering the periphery of the chassis structure (110) and closing the opening of the accommodating cavity;
and/or,
further comprising a feature shell (740) covering the outer side of the housing member (730), the feature shell (740) comprising an inner shell (741) and an outer shell (742) wrapping the inner shell (741), the softness of the outer shell (742) being greater than that of the outer peripheral surface of the housing member (730), the chassis structure (110), or the trunk structure (10).

10. The robot according to any one of claims 1-4, **characterized in that** the robot further comprising a braking structure (220) driven by external force to cut off a circuit, the braking structure (220) comprising:
a trigger assembly (221) comprising a spaced moving member (221a) and at least one switch body (221b), the switch body (221b) is connected to the trunk structure (10), the moving member (221a) comprising a first position and a second position; in the first position, the moving member (221a) triggers the switch body (221b) and the circuit is disconnected; in the second position, the moving member (221a) is separated from all the switch bodies (221b); and
at least one reset assembly (222) connected between the moving member (221a) and the trunk structure (10), the reset assembly (222) applying a biasing force to the moving member (221a) toward the second position.
